(19) **Europäisches Patentamt**
**European Patent Office**
**Office européen des brevets**

(11) **EP 2 221 194 B1**

(12) **EUROPEAN PATENT SPECIFICATION**

(45) Date of publication and mention
of the grant of the patent:
**17.10.2012 Bulletin 2012/42**

(51) Int Cl.:
*B60B 27/00* *(2006.01)* *B21K 1/12* *(2006.01)*
*B21K 1/40* *(2006.01)*

(21) Application number: **10153657.1**

(22) Date of filing: **16.02.2010**

(54) **Wheel bearing device and manufacturing method therefor**

Radlagervorrichtung und Herstellungsverfahren dafür

Dispositif de roulement de roue et son procédé de fabrication

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority:
**17.02.2009 JP 2009034580
17.02.2009 JP 2009034581
17.02.2009 JP 2009034582
17.02.2009 JP 2009034584
17.02.2009 JP 2009034585
17.02.2009 JP 2009034586
17.02.2009 JP 2009034623
17.02.2009 JP 2009034624
17.02.2009 JP 2009034625
10.02.2010 JP 2010027149**

(43) Date of publication of application:
**25.08.2010 Bulletin 2010/34**

(73) Proprietor: **JTEKT CORPORATION
Osaka-shi
Osaka 542-8502 (JP)**

(72) Inventors:
• **Masuda, Yoshinori
c/o JTEKT CORPORATION
Osaka-shi, Osaka 542-8502 (JP)**

• **Yokota, Tatsuya
c/o JTEKT CORPORATION
Osaka-shi, Osaka 542-8502 (JP)**
• **Seo, Nobuyuki
c/o JTEKT CORPORATION
Osaka-shi, Osaka 542-8502 (JP)**
• **Murakami, Takanobu
c/o JTEKT CORPORATION
Osaka-shi, Osaka 542-8502 (JP)**
• **Okumura, Tsuyoshi
c/o JTEKT CORPORATION
Osaka-shi, Osaka 542-8502 (JP)**
• **Takada, Yoshito
c/o JTEKT CORPORATION
Osaka-shi, Osaka 542-8502 (JP)**

(74) Representative: **TBK
Bavariaring 4-6
80336 München (DE)**

(56) References cited:
**EP-A1- 1 970 141       EP-A2- 1 647 418
JP-A- 11 129 703       JP-A- 2004 074 815
JP-A- 2008 229 671**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a wheel bearing device according to the preamble of claim 1.

There is a wheel bearing device that includes a flanged shaft member (which may also be called hub wheel). The flanged shaft member has a shaft portion, a fitting shaft portion and a plurality of flange portions. A rolling bearing is assembled to the shaft portion. The fitting shaft portion is formed on one end of the shaft portion, and has a larger diameter than that of the shaft portion. A center hole of a wheel is fitted to the fitting shaft portion. The plurality of flange portions extend radially outward on an outer peripheral surface located between the shaft portion and the fitting shaft portion. Each of the plurality of flange portions has a through bolt hole in which a hub bolt for fastening the wheel is arranged.

The thus configured wheel bearing device is, for example, described in JP-A-2003-25803. In this wheel bearing device, a flanged shaft member (hub wheel) is shaped by cold forging using a cylindrical tube as a base material, and a plurality of circumferential portions of one shaft end portion of the cold-forged base material are cut and raised radially outward. Thus, a plurality of flange portions (raised pieces) are formed. Then, a fitting shaft portion (to which a wheel is fitted to be positioned) formed of a plurality of tongue pieces is provided at the one shaft end portion of the base material. The plurality of tongue pieces extending in the axial direction are left between the plurality of flange portions.

Incidentally, in the existing wheel bearing device described in JP-A-2003-25803, a flanged shaft member is configured so that the plurality of flange portions formed of raised pieces are formed at the one shaft end portion of a forging shaped by cold forging using a cylindrical tube as a base material. By so doing, it is possible to reduce the weight of the wheel bearing device (mainly, the flanged shaft member).

However, in the existing wheel bearing device, after a forging is manufactured by cold forging, a plurality of flange portions formed of raised pieces need to be formed at one shaft end portion of the forging, so manufacturing costs increase.

EP 1 970 141 A1 discloses a generic wheel bearing device according to the preamble of claim 1.

Further wheel bearing devices are known from EP 1 647 418 A2, JP 2008 229671 A1, JP 11 129703 A and JP 2004 074815 A.

It is the object of the invention to provide a wheel bearing device having an improved accuracy, which can be produced at reduced manufacturing costs and with a reduced weight.

The object of the invention is achieved with a wheel bearing device according to claim 1.

Further advantageous developments of the invention are subject-matter of the dependent claims.

According to the invention, the plurality of flange portions are formed radially on the outer peripheral surface located between the shaft portion and the fitting shaft portion by cold side extrusion. Thus, it is possible to reduce manufacturing costs while reducing the weight.

The foregoing and further features and advantages of the invention will become apparent from the following description of example embodiments with reference to the accompanying drawings, wherein like numerals are used to represent like elements and wherein:

FIG. 1 is a longitudinal sectional view that shows a wheel bearing device according to a first embodiment of the invention;

FIG. 2 is a longitudinal sectional view that shows a flanged shaft member according to the first embodiment;

FIG. 3 is a plan view that shows the flanged shaft member from a fitting shaft portion side, according to the first embodiment;

FIG. 4 is an explanatory diagram for illustrating the manufacturing process of the flanged shaft member, according to the first embodiment;

FIG. 5 is a longitudinal sectional view that shows a state where a primary molding is set in a cavity of a pair of first and second molding dies of a cold forging apparatus and the first and second molding dies are closed, according to the first embodiment;

FIG. 6 is a longitudinal sectional view that shows a state where a plurality of flange portions are formed by side extrusion while forming a forged recess on an end surface of the fitting shaft portion of the primary molding using a punch, according to the first embodiment;

FIG. 7 is an enlarged longitudinal sectional view that shows a flange molding portion of the cavity of the pair of first and second molding dies, according to the first embodiment;

FIG. 8 is an enlarged longitudinal sectional view that shows a flange molding portion of a cavity of a pair of first and second molding dies, according to a second embodiment of the invention;

FIG. 9 is an enlarged longitudinal sectional view that shows a flange molding portion of a cavity of a pair of first and second molding dies, according to a third embodiment of the invention;

FIG. 10 is a plan view that shows a flanged shaft member of a wheel bearing device from a fitting shaft portion side, according to a fourth embodiment of the invention;

FIG. 11 is a perspective view that shows a punch used in a manufacturing method for the wheel bearing device, according to the fourth embodiment;

FIG. 12 is a longitudinal sectional view that shows a wheel bearing device, according to a fifth embodiment of the invention;

FIG. 13 is a plan view that shows a flanged shaft member from a fitting shaft portion side, according to the fifth embodiment;

FIG. 14 is a cross-sectional view of a flange portion, taken along the line XIV-XIV in FIG. 13;

FIG. 15 is a longitudinal sectional view that shows a pair of first and second molding dies of a cold forging apparatus used in a manufacturing method for the wheel bearing device, according to the fifth embodiment of the invention;

FIG. 16 is a cross-sectional view of a flange molding portion, taken along the line XVI-XVI in FIG. 15;

FIG. 17 is an enlarged longitudinal sectional view of the flange molding portion of a cavity of the pair of first and second molding dies, according to the fifth embodiment;

FIG. 18 is an explanatory diagram for illustrating the plane projection area of the flange portions and intermediate shaft portion of the flanged shaft member, according to the first, fourth or fifth embodiment of the invention;

FIG. 19 is an enlarged longitudinal sectional view that shows a flange portion of a flanged shaft member of a wheel bearing device, according to a sixth embodiment of the invention;

FIG. 20 is a cross-sectional view of the flange portion, taken along the line XX-XX in FIG. 19;

FIG. 21 is a cross-sectional view of a flange molding portion in a cold forging apparatus used in a manufacturing method for the wheel bearing device, according to the sixth embodiment;

FIG. 22 is a longitudinal sectional view that shows a pair of first and second molding dies of a cold forging apparatus used in a manufacturing method for a wheel bearing device, according to a seventh embodiment of the invention;

FIG. 23 is a longitudinal cross-sectional view that shows a pair of first and second molding dies of a cold forging apparatus used in a manufacturing method for a wheel bearing device, according to an eighth embodiment of the invention;

FIG. 24 is a longitudinal sectional view that shows a wheel bearing device, according to a ninth embodiment of the invention;

FIG. 25 is a plan view that shows a flanged shaft member from a fitting shaft portion side, according to the ninth embodiment;

FIG. 26 is a perspective view that shows the flanged shaft member from the fitting shaft portion side, according to the ninth embodiment;

FIG. 27 is a longitudinal sectional view that shows a state where a primary molding is set in a cavity of a pair of first and second molding dies of a cold forging apparatus used in a manufacturing method for the wheel bearing device and the first and second molding dies are closed, according to the ninth embodiment;

FIG. 28 is a longitudinal sectional view that shows a state where a plurality of flange portions are formed by side extrusion while forming a forged recess on an end surface of the fitting shaft portion of the primary molding using a punch, according to the ninth embodiment;

FIG. 29 is a perspective view that shows the punch, according to the ninth embodiment;

FIG. 30 is a cross-sectional view of a flange portion that has a recess at a widthwise center portion at a rotor support surface side thereof and that is formed in a shape having a U-shaped cross section in a flanged shaft member used in a wheel bearing device, according to an embodiment of the invention;

FIG. 31 is a cross-sectional view that shows an embodiment in which a flange portion has a recess at a widthwise center portion at a bolt bearing surface side thereof and is formed in a shape having a U-shaped cross section;

FIG. 32 is a cross-sectional view that shows an embodiment in which a flange portion has a recess at each of widthwise center portions at a rotor support surface side and bolt bearing surface side thereof and is formed in a shape having an H-shaped cross section;

FIG. 33 is a cross-sectional view that shows an embodiment in which a flange portion has a width larger at a bolt bearing surface side than at a rotor support surface side and is formed in a shape having a trapezoidal cross section;

FIG. 34 is a cross-sectional view that shows an embodiment in which a flange portion that has a width larger at a rotor support surface side than at a bolt bearing surface side and is formed in a shape having a trapezoidal cross section;

FIG. 35 is a plan view that shows an embodiment in which a flange portion has a U-shaped cross section in a region ranging from a base portion (proximal portion) to a portion near a bolt hole and has a rectangular cross section in a region ranging from a portion near the bolt hole to a distal end;

FIG. 36 is a cross-sectional view of a flange portion, taken along the line XXXVI-XXXVI in FIG. 35;

FIG. 37 is a cross-sectional view of the flange portion, taken along the line XXXVII-XXXVII in FIG. 35; and

FIG. 38 is a longitudinal sectional view that shows an embodiment in which guide rollers are arranged in relief portions of a flange molding portion of a cold forging apparatus used in a manufacturing method for a wheel bearing device of the invention.

Embodiments of the invention will be described.

First Embodiment

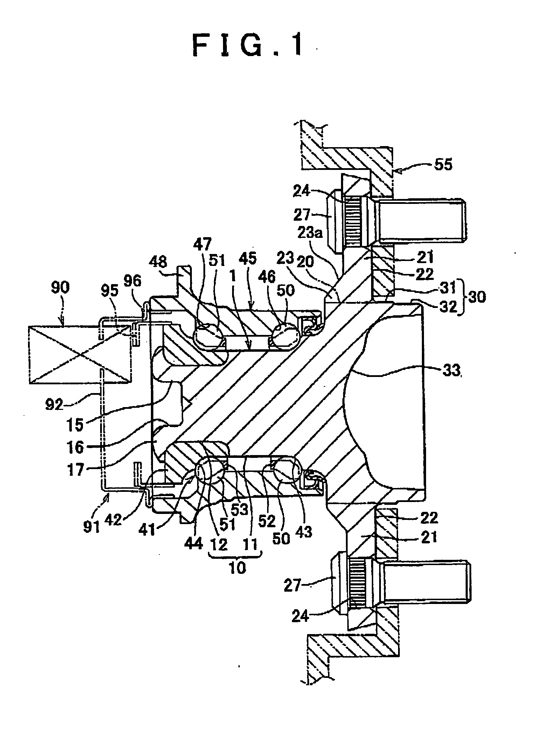

First, a wheel bearing device according to a first embodiment of the invention will be described with reference to FIG. 1 to FIG. 3. As shown in FIG. 1, a wheel hub unit includes a unit of a flanged shaft member (hub wheel) 1 and a double row angular contact ball bearing 41. The wheel hub unit serves as the wheel bearing device. The double row angular contact ball bearing 41 serves as a rolling bearing.

The flanged shaft member 1 integrally includes a shaft portion 10, a fitting shaft portion 30, a flange proximal portion 20a and a plurality of flange portions 21. The double row angular contact ball bearing 41, which serves as the rolling bearing, is assembled onto the outer peripheral surface of the shaft portion 10. The fitting shaft portion 30 is formed on one end side of the shaft portion 10 and has a larger diameter than that of the shaft portion 10. The fitting shaft portion 30 is fitted to a center hole of a wheel (not shown). The flange proximal portion 20a is located between the shaft portion 10 and the fitting shaft portion 30. The plurality of flange portions 21 extend radially outward on the outer peripheral surface of the flange proximal portion 20a. Each of the plurality of flange portions 21 has a through bolt hole 24 at a portion adjacent to the distal end. A hub bolt 27 for fastening the wheel is press-fitted and arranged in a corresponding one of the bolt holes 24.

In addition, the fitting shaft portion 30 has a brake rotor fitting portion 31 and a wheel fitting portion 32. The brake rotor fitting portion 31 is formed at a portion adjacent to the flange portions 21. The wheel fitting portion 32 is formed at a portion adjacent to the distal end. The wheel fitting portion 32 has a diameter that is slightly smaller than that of the brake rotor fitting portion 31.

In the first embodiment, the double row angular contact ball bearing 41 is configured as follows. An outer ring member 45 is arranged around the outer peripheral surface of the shaft portion 10 of the flanged shaft member 1 with an annular gap. A plurality of balls 50 and 51, which serve as rolling elements, are respectively held by retainers 52 and 53 and respectively installed between both raceway surfaces 46 and 47 and both raceway surfaces 43 and 44. Both raceway surfaces 46 and 47 are formed on the inner peripheral surface of the outer ring member 45, spaced apart from each other at a predetermined distance in the axial direction. Both raceway surfaces 43 and 44 are formed on the shaft portion 10.

In addition, in the first embodiment, the shaft portion 10 of the flanged shaft member 1 has a stepped shaft shape so that a portion adjacent to the flange portions 21 has a large diameter and a portion adjacent to the distal end has a small diameter, and one raceway surface 43 is formed on the outer peripheral surface of the large-diameter portion 11 of the shaft portion 10.

In addition, an inner ring member 42 is fitted onto the outer peripheral surface of the small-diameter portion 12 of the shaft portion 10, and the other raceway surface 44 is formed on the outer peripheral surface of the inner ring member 42.

Furthermore, an end shaft portion 15 having the same diameter as the small-diameter portion 12 is extended at the distal end portion of the shaft portion 10. A shaft end recess 16 is formed at the center of the end surface of the end shaft portion 15. The distal end portion of the end shaft portion 15 is swaged radially outward to form a swaged portion 17. Thus, the inner ring member 42 is fixed to the outer peripheral surface of the small-diameter portion 12.

In addition, a vehicle body-side flange 48 is integrally formed at the axially center portion of the outer peripheral surface of the outer ring member 45. The wheel hub unit is, for example, coupled at the vehicle body-side flange 48 by bolts to a vehicle body-side member, such as a knuckle supported by a suspension (not shown) of the vehicle and a fitting surface of a carrier.

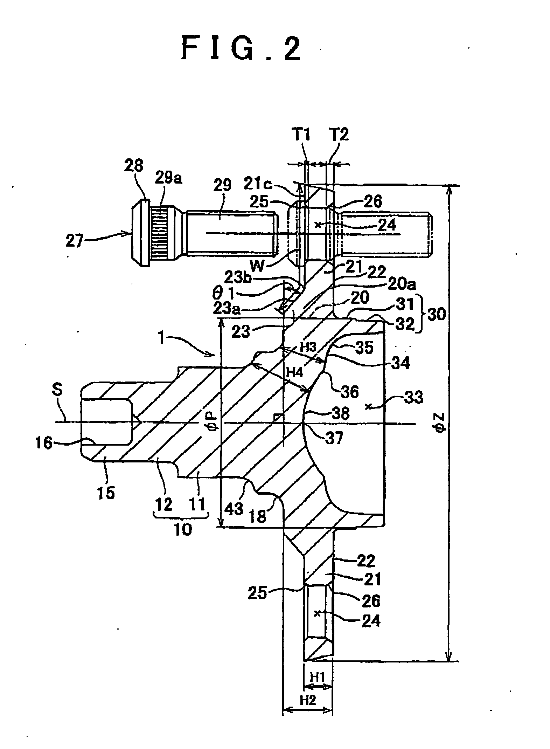

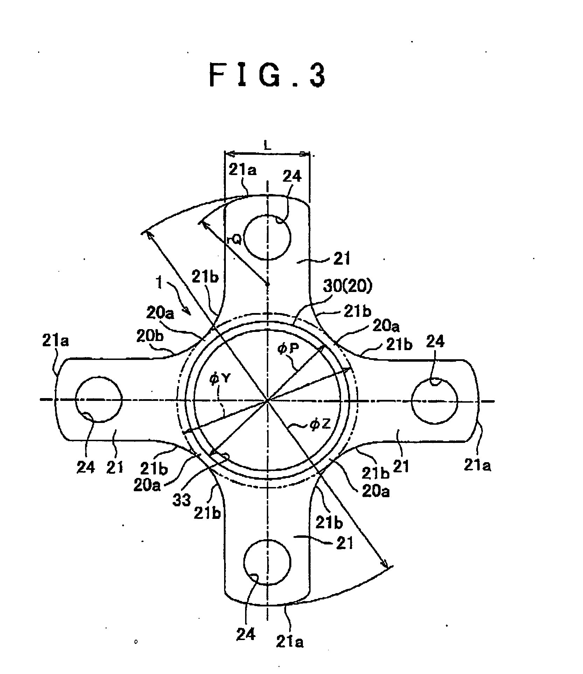

As shown in FIG. 2 and FIG. 3, the plurality of flange portions 21 of the flanged shaft member 1 are formed by side extrusion when a forged recess 33 is formed at the center of the end surface of the fitting shaft portion 30 by cold forging. In addition, a thick portion 23 is formed at one side (a vehicle interior side when a rotor support surface 22 of each flange portion 21 is directed to a vehicle exterior side) of the base portion (proximal portion) and a portion near the base portion (hereinafter, simply referred to as the portion near the base portion) of each flange portion 21. Each thick portion 23 projects toward the vehicle interior side.

Furthermore, each thick portion 23 is formed in a slope shape so that thickness of the thick portion 23 gradually reduces from a portion adjacent to the base portion (proximal portion) of the flange portion 21 toward a portion adjacent to the bolt hole 24 of the flange portion 21. The inclination angle (angle with respect to an annular flat surface 23c perpendicular to a rotation center axis S of the flanged shaft member 1) $\theta 1$ of an inclined surface 23a of the thick portion 23 is desirably set to satisfy the relationship $20° \le \theta 1 \le 45°$ when taking into consideration flow of material during cold forging and release of a forging from dies after molding.

In addition, as shown in FIG. 3, in order for stress not to concentrate on the base portions of both widthwise side surfaces of each flange portion 21, the base portions of both widthwise side surfaces of each flange portion 21 each form a curved surface (including circular arc surface) 21b that gradually increases in width toward the outer peripheral surface of the flange proximal portion 20a, and the curved surfaces 2 1 b of the adjacent flange portions 21 are continuous with the outer peripheral surface of the flange proximal portion 20a. In addition, as shown in FIG. 3, the distal end surface of each flange portion 21 is formed with a circular are surface 21a having a radius that is about half the diameter of the brake rotor fitting portion 31 of the fitting shaft portion 30. That is, where the diameter of the brake rotor fitting portion 31 of the fitting shaft portion 30 is $\phi P$, and the radius of the circular arc surface 21a formed at the distal end of the flange portion 21 is rQ, the distal end surface of each flange portion 21 is formed to satisfy the relationship $\phi P/2 \approx rQ$.

In addition, where the volume of the flange proximal portion 20a is Vj, a radius corresponding to a distance from the center concentric to the center of the shaft portion 10 to the distal end of each flange portion 21 is $\phi Z/2$ and the volume of a disc portion (imaginary disc portion) having a thickness corresponding to the thickness H1 of each flange portion 21 is Vk, these are set to satisfy the relationship "$2.5 \times Vj \leq Vk \leq 3.5 \times Vj$".

Note that, where the diameter of the flange proximal portion 20a is $\phi Y$, and the shaft length is H2, the volume Vj of the flange proximal portion 20a is obtained from the equation "$Vj = (\phi Y/2)^2 \times \pi \times H2$". The volume Vk of the disc portion (imaginary disc portion) is obtained from the equation "$Vk = (\phi Z/2)^2 \times \pi \times H1$".

In addition, where the plane projection area of the disc portion (imaginary disc portion) is M1, and the plane projection area of the plurality of flange portions 21 and flange proximal portion 20a is M2, it is desirable that these are set to satisfy the relationship "$0.50 \leq M2/M1 \leq 0.60$".

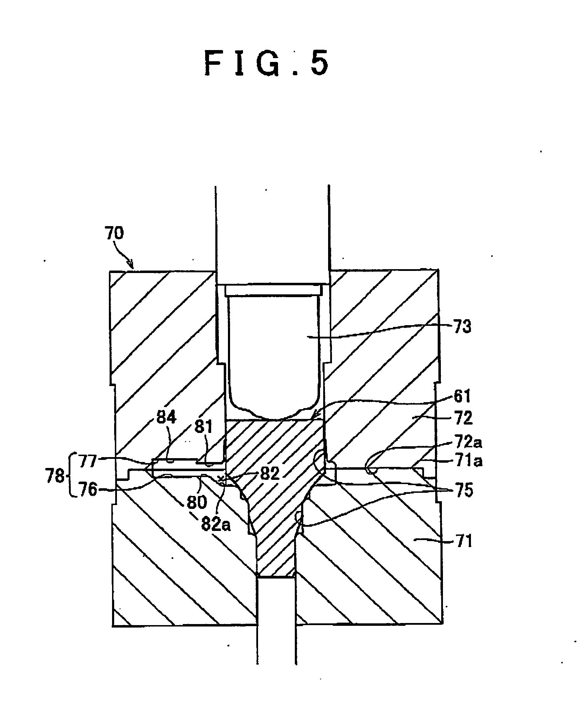

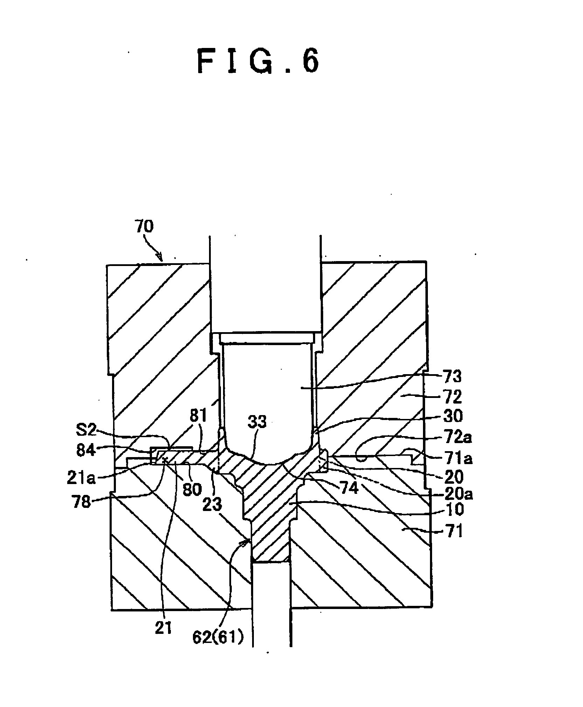

In this case, as shown in FIG. 5 and FIG. 6, the areas of die matching surfaces 71a and 72a of first and second molding dies 71 and 72, which serve as molding dies, are sufficiently ensured. Therefore, in a state where the first and second molding dies 71 and 72 are closed, it is possible to prevent excessive pressure from acting on the die matching surfaces 71a and 72a of the first and second molding dies 71 and 72. Thus, the die life of the molding dies improves.

Note that the plane projection area M1 of the disc portion (imaginary disc portion) is obtained from the equation "$M1 = (\phi Z/2)^2 \times \pi$". Where the number of the flange portions 21 is N, and the width of each flange portion 21 is L, the plane projection area M2 of the plurality of flange portions 21 and the intermediate shaft portion 20 is obtained from the equation "$M2 = N \times L \times 1/2(\phi Z - \phi Y) + (\phi Y/2)^2 \times \pi$".

In addition, in order to reduce the weight while ensuring the strength and rigidity of portions of the flanged shaft member 1, as shown in FIG. 2, the forged recess 33 recessed on the end surface of the fitting shaft portion 30 is formed with a deep bottom so that a plurality of curved surfaces are continuously formed from an opening side toward a bottom portion.

In the first embodiment, the forged recess 33 is formed in a stepped shape so as to have a shallow portion 34 and a deep portion 37. The shallow portion 34 has a curved surface (concave curved surface) 35 with the depth substantially equal to a distance from the distal end surface of the wheel fitting portion 32 of the fitting shaft portion 30 to the rotor support surface 22 of each flange portion 21. The deep portion 37 is recessed at the center of the shallow portion 34, and is continuous with the shallow portion 34 via an intermediate curved surface (convex curved surface) 36.

Furthermore, the deep portion 37 of the forged recess 33 has a curved surface (concave curved surface) 38 that gradually deepens toward the center.

Note that the curved surface (concave curved surface) 35, the intermediate curved surface (convex curved surface) 36 and the curved surface (concave curved surface) 38 each may also include a circular arc surface.

As shown in FIG. 2, where the thickness of each flange portion 21 is H1, the minimum thickness between the forged recess 33 and a lip sliding surface 18 of the shaft portion 10, facing a seal member, is H3, and the minimum thickness between the forged recess 33 and the raceway surface 43 of the shaft portion 10 is H4, the flanged shaft member 1 is desirably formed to satisfy the relationships "$H1 \leq H3 \leq H4$" and "$H4 \geq 4.5$ mm". In this case, it is possible to effectively reduce the weight while ensuring sufficient strength and rigidity of portions of the flanged shaft member 1.

As shown in FIG. 2, a first chamfered portion 25 is formed at one opening edge (at a side toward which warpage faces when the warpage occurs in the flange portion 21 through side extrusion) of both opening edges of the bolt hole 24 of each flange portion 21, and a second chamfered portion 26 is formed at the other opening edge of the bolt hole 24.

Furthermore, where the chamfer depth of the first chamfered portion 25 is T1, and the chamfer depth of the second chamfered portion 26 is T2, these are set to satisfy the relationship "T1 < T2".

In the first embodiment, each thick portion 23 is formed at one side surface near the base portion of a corresponding one of the flange portions 21 when the flange portions 21 are formed by side extrusion.

In addition, in the cold side extrusion, warpage tends to occur in each flange portion 21 because of the flow characteristics of the material along the fiber flow lines so that the distal end of each flange portion 21 slightly deforms toward the thick portion 23.

In order to reduce the warpage of each flange portion 21, the first chamfered portion 25 is formed at one of both opening edges of the bolt hole 24 of each flange portion 21, at which the thick portion 23 is formed, and the second chamfered portion 26 is formed at the other opening edge.

In the thus configured wheel bearing device according to the first embodiment of the invention, the plurality of flange portions 21 are formed radially on the outer peripheral surface of the flange proximal portion 24a, which is located between the shaft portion 10 and the fitting shaft portion 30, by cold side extrusion. Thus, it is possible to reduce manufacturing cost while reducing the weight.

In addition, as shown in FIG. 2, the thick portion 23 is formed at one side near the base portion of each flange portion 21. Thus, it is possible to desirably improve the strength of portions near the base portions of the flange portions 21, so durability is high.

In addition, in the first embodiment, each thick portion 23 is formed in a slope shape so that the thickness of the thick portion 23 gradually reduces from a portion adjacent to the base portion of the flange portion 21 toward a portion adjacent to the bolt hole 24. Therefore, it is possible to effectively improve the strength of portions near the base portion of each flange portion 21 while suppressing an increase in weight.

In addition, when the inclination angle $\theta 1$ of the inclined surface 23a of the thick portion 23 of each flange portion 21 is set to satisfy the relationship "$20° \leq \theta 1 \leq 45°$", flow of material in cold side extrusion is smooth, and release of a forging from the molding dies is easy. Furthermore, a bolt bearing surface 21c around one opening edge of the bolt hole 24 of each flange portion 21 may be easily ensured sufficiently.

In other words, when the inclination angle $\theta 1$ of the inclined surface 23a of the thick portion 23 of each flange portion 21 is larger than 45°, inconvenience tends to occur. That is, flow of material in cold side extrusion may deteriorate or releaseability of a forging from the molding dies may deteriorate.

In addition, when the inclination angle $\theta 1$ of the inclined surface 23a of the thick portion 23 of each flange portion 21 is smaller than 20°, the inclined surface 23a of the thick portion 23 elongates toward the bolt hole 24 of the flange portion 21, so inconvenience tends to occur. That is, it may be difficult to ensure the bolt bearing surface 21c.

However, as described above, by setting the inclination angle $\theta 1$ of the inclined surface 23a of the thick portion 23 of each flange portion 21 so as to satisfy the relationship "$20° \leq \theta 1 \leq 45°$", the above inconvenience does not occur.

In addition, in the first embodiment, by forming the plurality of flange portions 21 radially on the outer peripheral surface of the flange proximal portion 20a, which is located between the shaft portion 10 and the fitting shaft portion 30, by cold side extrusion, it is possible to reduce manufacturing cost while reducing the weight.

Furthermore, when a distance from the center concentric to the center of the shaft portion 10 to the distal end of each flange portion 21, that is, the radius, is $\phi Z/2$, the volume of the disc portion (imaginary disc portion) having a thickness corresponding to the thickness H1 of each flange portion 21 is Vk, and the volume of the flange proximal portion 20a of the flanged shaft member 1 is Vj, these are set to satisfy the relationship "$2.5 \times Vj \leq Vk \leq 3.5 \times Vj$".

By so doing, it is possible to effectively reduce the weight, and at the same time, it is possible to desirably ensure the strength and rigidity required of the flange portions 21.

That is, when the volume Vk of the disc portion (imaginary disc portion) is smaller than two and half times the volume Vj of the flange proximal portion 20a, inconvenience occurs. That is, it may be difficult to ensure the strength and rigidity required of the flange portions 21.

In addition, when the volume Vk of the disc portion (imaginary disc portion) exceeds three and half times the volume Vj of the intermediate shaft portion 20, there occurs inconvenience, such as difficulty in forming the flange portions 21 by cold side extrusion. However, when these volumes Vk and Vj are set to satisfy the relationship "$2.5 \times Vj \leq Vk \leq 3.5 \leq Vj$", the above inconvenience does not occur.

In addition, in the first embodiment, the forged recess 33 formed at the end surface of the fitting shaft portion 30 is formed with a deep bottom so that the plurality of curved surfaces (circular arc surfaces) are formed from the opening side toward the bottom portion. This effectively contributes to reduction in weight. In the first embodiment, the forged recess 33 is formed in a stepped shape having the shallow portion 34 and the deep portion 37, so it is possible to effectively reduce the weight while ensuring the strength and rigidity.

In addition, in the first embodiment, the deep portion 37 of the forged recess 33 is continuous with the shallow portion 34 via the intermediate curved surface 36 and forms the curved surface 38 that gradually deepens toward the center, so it is possible to further effectively reduce the weight while ensuring the strength and rigidity.

For example, when one raceway surface 43 of the angular contact ball bearing 41 is formed on the outer peripheral surface, adjacent to the flange portions 21, of the shaft portion 10 of the flanged shaft member 1, it is possible to easily ensure the necessary minimum thickness H4 between the raceway surface 43 and the forged recess 33. For example, if the forged recess 33 of the fitting shaft portion 30 is formed in a cylindrical shape having the same diameter from the opening portion to the bottom portion, inconvenience tends to occur. That is, the thickness of the fitting shaft portion 30 may be thicker than necessary or the thicknesses of portions of the flanged shaft member 1 may be thinner than necessary. However, such inconvenience does not occur by forming the forged recess 33 in a stepped shape having the shallow portion 34 and the deep portion 37.

In the first embodiment, where the thickness of each flange portion 21 is H1, the minimum thickness between the forged recess 33 and the lip sliding surface 18 of the shaft portion 10, facing the seal member, is H3, and the minimum thickness between the forged recess 33 and the raceway surface 43 of the shaft portion 10 is H4, the flanged shaft member 1 is formed to satisfy the relationships "$H1 \leq H3 \leq H4$" and "$H4 \geq 4.5$ mm". By so doing, it is possible to effectively reduce the weight while ensuring sufficient strength and rigidity of portions of the flanged shaft member 1.

In addition, in the first embodiment, as shown in FIG. 2, where the depth of the first chamfered portion 25 located at the thick portion 23 side of each flange portion 21 is T1, and the depth of the second chamfered portion 26 located at the other side is T2, both first and second chamfered portions 25 and 26 formed at the opening portions at both ends of the bolt hole 24 of each flange portion 21 are set to satisfy the relationship "T1 < T2".

That is, in a state where a serration shaft portion (formed at the base portion of a shaft portion 29) 29a of the hub bolt 27 has been press-fitted into the bolt hole 24 of a corresponding one of the flange portions 21, the flange portion 21 has a characteristic such that the flange portion 21 slightly deforms to have warpage toward a side at which the depth of the chamfered portion is large.

Therefore, as "warpage" occurs toward the thick portion 23 of a corresponding one of the flange portions 21 by cold side extrusion, the "warpage" toward the thick portion 23 side of the flange portion 21 is reduced in such a manner that the hub bolt 27 is press-fitted into the bolt hole 24 of the flange portion 21 thereafter.

Therefore, it is conceivable that, for example, installation of a brake rotor may become unstable because of the warpage of the flange portions 21; however, occurrence of "warpage" of each flange portion 21 toward the thick portion 23 is reduced as described above to thereby make it possible to stably install the brake rotor. In addition, this can prevent a situation that "warpage" of each flange portion influences the brake rotor to cause the braking surface of the brake rotor to deform to thereby generate noise and vibrations during braking operation.

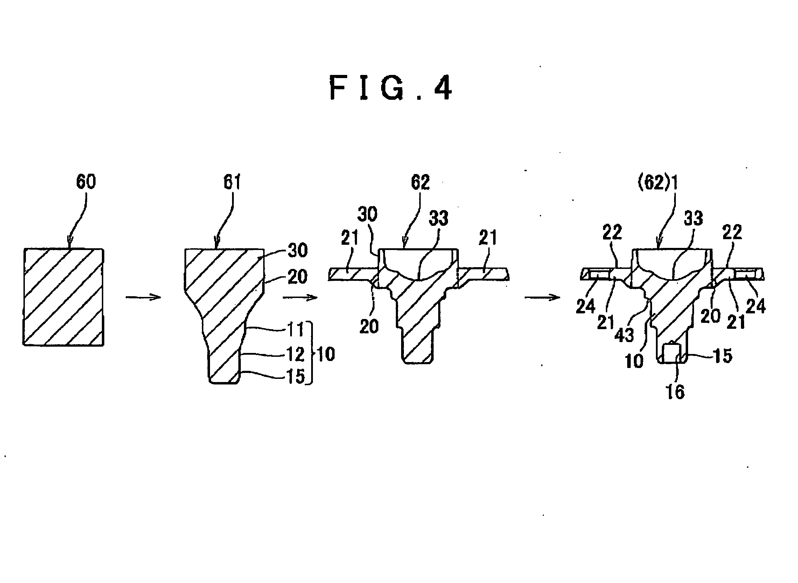

Next, a manufacturing method for the wheel bearing device according to the first embodiment will be described with reference to FIG. 4 to FIG. 7.

As shown in FIG. 4, a round bar material of structural carbon steel (for example, carbon steel, such as S45C, S50C and S55C, having a carbon content of about 0.5% is desirable) is cut into a desired length to form a shaft-like material 60.

Subsequently, the shaft-like material 60 is heated to, for example, about 800°C, and then cooled and annealed.

After that, a forging die apparatus (not shown) for cold forward extrusion is used to apply forward extrusion to the shaft-like material 60. By so doing, the shaft portion (including the large-diameter portion 11, the small-diameter portion 12 and the end shaft portion (in this state, no shaft end recess 16 is formed) 15) 10, the intermediate shaft portion (that forms the flange proximal portion 20a and part of the fitting shaft portion 30) 20 and the fitting shaft portion (in this state, neither the forged recess 33 nor the brake rotor fitting portion 31 is formed) 30 are formed to thereby manufacture a primary molding 61 by cold forward extrusion.

Thereafter, as shown in FIG. 4 to FIG. 7, a forging die apparatus 70 for cold side extrusion is used to form the forged recess 33 at the center of the end surface of the fitting shaft portion 30 while forming the plurality of flange portions 21 radially on the outer peripheral surface of the intermediate shaft portion 20 located between the shaft portion 10 and fitting shaft portion 30 of the primary molding 61, thus manufacturing a secondary molding 62.

As shown in FIG. 5 to FIG. 7, in the forging die apparatus 70 for cold side extrusion, a cavity 75 is formed between the pair of first and second molding dies 71 and 72. The primary molding 61 is set in the cavity 75. The cavity 75 has a plurality of radial flange molding portions 78 in order to form the plurality of flange portions 21 by side extrusion.

The flange molding portions 78 each are formed of molding grooves 76 and 77 formed respectively in the pair of first and second molding dies 71 and 72.

That is, a gap between facing guide surfaces 80 and 81 of both upper and lower wall surfaces of the molding grooves 76 and 77 of the pair of first and second molding dies 71 and 72 is set to a size equivalent to the thickness of each flange portion 21, and a gap between facing guide surfaces (not shown) of both side wall surfaces is set to a size equivalent to the width of each flange portion 21. Then, the cross-sectional shape of each flange molding portion 78 is formed to have the same shape as the cross-sectional shape of each flange portion 21.

In addition, a relief portion 84 is formed at the distal end side of the guide surface 81 other than a portion near the material inflow side in the molding groove 77 of the second molding die 72. The second molding die 72 is located opposite the thick portion 23 near the base portion of each flange portion 21. The relief portion 84 keeps a gap S2 from the flange portion 21.

On the other hand, in the first embodiment, the guide surface 80 of the molding groove 76 of the first molding die 71 that forms a portion adjacent to the thick portion 23 near the base portion of each flange portion 21 is formed with a die structure with no relief portion.

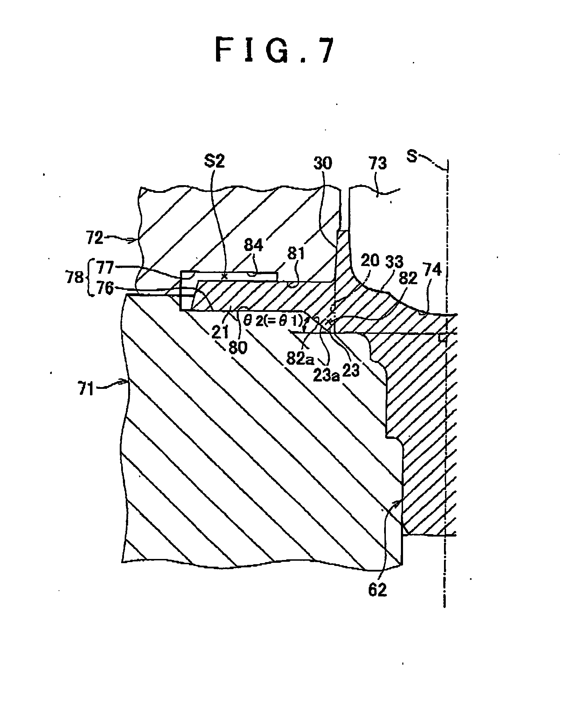

In addition, in the first embodiment, a thick portion molding groove 82 is formed at the material inflow side of the molding groove 76 of the first molding die 71. The thick portion molding groove 82 is used to form the thick portion 23 of each flange portion 21. The bottom surface of the thick portion molding groove 82 is formed with an inclined surface 82a so that the depth gradually reduces from a portion adjacent to the base portion of the flange portion 21 toward a portion adjacent to the bolt hole 24, and is continuous with the guide surface 80 (see FIG. 7).

In addition, an inclination angle $\theta 2$ of the inclined surface 82a of the bottom surface of the thick portion molding groove 82 is set as in the case of the inclination angle $\theta 1$ of the inclined surface 23a of the thick portion 23 of each flange portion 21, that is, so as to satisfy the relationship "$20° \le \theta 2 \le 45°$".

In addition, the radial length of each flange molding portion 78 formed of the molding grooves 76 and 77 is set so that the circular arc surface 21a at the distal end of each flange portion 21 does not contact a corresponding one of the flange molding portions 78 (see FIG. 6 and FIG. 7).

Then, first, as shown in FIG. 5, between the first molding die (drag) 71 and second molding die (cope) 72 of the forging die apparatus 70, the primary molding 61 is set in the first molding die 71, and the second molding die 72 is closed to the first molding die 71.

After that, as shown in FIG. 6 and FIG. 7, a punch 73 is lowered toward the center of the end surface of the fitting shaft portion 30 of the primary molding 61, and forms the forged recess 33 at the center of the end surface of the fitting shaft portion 30 by a distal end portion 74 of the punch 73 while applying side extrusion to the outer peripheral surface of the intermediate shaft portion 20 located between the shaft portion 10 and fitting shaft portion 30 of the primary molding 61 toward the flange molding portions 78 of the cavity 75 formed in the pair of first and second molding dies 71 and 72. By so doing, the plurality of flange portions 21 are formed. In the meantime, the thick portion 23 is formed at one side near the base portion of each flange portion 21. By so doing, the secondary molding 62 is manufactured by side extrusion. Note that the intermediate shaft portion 20 forms the flange proximal portion 20a and part of the fitting shaft portion 30 through deformation in cold forging.

Subsequently, portions of the secondary molding 62, which require turning, are subjected to turning. Then, through turning, for example, the bolt hole 24 is formed in each flange portion 21, and both chamfered portions 25 and 26 are respectively formed at the opening portions at both ends of each bolt hole 24. Furthermore, the shaft end recess 16 is formed in the end shaft portion 15 of the shaft portion 10.

After that, the secondary molding 62 is quenched, and then the raceway surface 43 of the large-diameter portion 11 of the shaft portion 10, the rotor support surface 22 of each flange portion 21, and the like, are formed by turning or polishing. By so doing, the flanged shaft member 1, which is a finished product, is manufactured.

In addition, where the weight of the shaft-like material 60 is N1, the weight of the secondary molding 62 is N2 and the weight of the flanged shaft member 1 is N3, these are desirably set to satisfy the relationship "N1 ≈ N2" and "$0.93 \times N1 \geq N3 \geq 0.86 \times N1$". In this case, the flanged shaft member 1 may be manufactured from the shaft-like material 60 in good material yield.

In addition, in the first embodiment, as shown in FIG. 2, where the depth of the first chamfered portion 25 located at the thick portion 23 side of each flange portion 21 is T1, and the depth of the second chamfered portion 26 located at the other side is T2, both first and second chamfered portions 25 and 26 formed at the opening portions at both ends of the bolt hole 24 of each flange portion 21 are desirably set to satisfy the relationship "T1 < T2".

That is, in a state where a serration shaft portion (formed at the base portion of the shaft portion 29) 29a of the hub bolt 27 has been press-fitted into the bolt hole 24 of a corresponding one of the flange portions 21, the flange portion 21 has a characteristic such that the flange portion 21 slightly deforms to have warpage toward a side at which the depth of the chamfered portion is large.

Therefore, even if "warpage" occurs toward the thick portion 23 of a corresponding one of the flange portions 21 by side extrusion, the "warpage" toward the thick portion 23 side of the flange portion 21 is reduced in such a manner that the hub bolt 27 is press-fitted into the bolt hole 24 of the flange portion 21.

In addition, in the first embodiment, it is desirable to ensure plane accuracy (for example, squareness is 0.1 or below) required of each flange portion 21 and to improve the strength by means of the following manner. As shown in FIG. 2, the bolt bearing surface 21c is formed at one side surface of each flange portion 21, at which the thick portion 23 is formed (surface opposite to the rotor support surface 22), and contacts the lower surface of a head 27 of the hub bolt 27, and then the bolt bearing surface 21c is finished by coining.

Furthermore, it is desirable to further improve the strength of each flange portion 21 by finishing a region that extends over the area of the bolt bearing surface 21c to a boundary R surface 23b of the inclined surface 23a of the thick portion 23 of each flange portion 21 or to the boundary R surface 23b and the inclined surface 23a (coining region W shown in FIG. 2) by means of coining.

In addition, it is desirable to finish the surface through coining so that the surface hardness is HRC25 or above, and the surface roughness Ra is 6.3 or below.

In addition, it is desirable to perform finishing through coning over a region (coining region W shown in FIG. 2) that extends from the distal end at one side surface of each flange portion 21, including the bolt bearing surface 2 1 c, to the boundary R surface 23b of the inclined surface 23a of the thick portion 23 of each flange portion 21 or to the boundary R surface 23b and the inclined surface 23a.

After that, the secondary molding 62 is quenched, and then the raceway surface 43 of the large-diameter portion 11 of the shaft portion 10, the rotor support surface 22 of each flange portion 21, and the like, are formed by turning or polishing. Thus, the flanged shaft member 1, which is a finished product, is manufactured.

Lastly, as shown in FIG. 1, the plurality of balls 50 and 51, the retainers 52 and 53 and the outer ring member 45 are assembled onto the outer peripheral surface of the shaft portion 10 of the flanged shaft member 1.

Then, after the inner ring member 42 is fitted onto the outer peripheral surface of the small-diameter portion 12 of the shaft portion 10, the distal end portion of the end shaft portion 15 is swaged radially outward to form the swaged portion 17. By so doing, the inner ring member 42 is fixed to the outer peripheral surface of the small-diameter portion 12.

In addition, before or after the angular contact ball bearing 41 is assembled to the outer peripheral surface of the shaft portion 10 of the flanged shaft member 1, the shaft portion 29 of each hub bolt 27 is inserted from the first chamfered portion 25 side of the bolt hole 24 of a corresponding one of the flange portions 21, and the serration shaft portion 29a of the shaft portion 29 is press-fitted into the bolt hole 24. By so doing, each hub bolt 27 is fixed to a corresponding one of the flange portions 21.

In this way, the wheel bearing device is manufactured.

Note that as shown in FIG. 1, a pulser ring 96 is, where necessary, fixedly press-fitted to the outer peripheral surface of the inner ring member 42. The pulser ring 96 has a detected portion 95 in the circumferential direction. The detected portion 95 faces a speed sensor 90. In this case, a closed-end cylindrical cover member 91 is fixedly press-fitted to the inner peripheral surface at the end portion of the outer ring member 45, and the speed sensor 90 is attached to a cover plate portion 92 of the cover member 91 so that the detecting portion of the speed sensor 90 is placed to face the detected portion 95 of the pulser ring 96.

In the thus configured manufacturing method for the wheel bearing device according to the first embodiment of the invention, the relief portion 84 that keeps the gap S2 between each flange portion 21 and a corresponding one of the molding grooves 77 of the second molding die 72 is formed at a portion corresponding to a side opposite a side of the thick portion 23 near the base portion of the flange portion 21. Therefore, it is possible to reduce contact friction force between material at the time of flow of material in cold forging and each molding groove 77 of the second molding die 72 by the amount corresponding to the relief portion 84 when the flange portions 21 are formed while the forged recess 33 is formed at the center of the end surface of the fitting shaft portion 30 by the distal end portion 74 of the punch 73. By so doing, abrasion of the molding dies, specifically, the second molding die 72, is reduced to make it possible to improve the die life

In addition, in the first embodiment, the first molding die 71 has a die structure such that no relief portion is formed in each molding groove 76. By so doing, the first molding die 71 is able to appropriately suppress occurrence of "warpage" toward the thick portion 23 side of each flange portion 21 because of the flow characteristics of the material along the fiber flow lines in cold forging.

That is, cold forging has a characteristic such that warpage directed toward the thick portion 23 tends to occur in each flange portion 21 because of the flow characteristics of the material along the fiber flow lines. Because of warpage toward the thick portion 23 side of each flange portion 21, for example, it may be difficult to finish the entire surface of the rotor support surface 22 of each flange portion 21 into a flat surface. When the entire surface of the rotor support surface 22 of each flange portion 21 is not finished into a flat surface, it is conceivable that, for example, installation of the brake rotor 55 becomes unstable. However, by suppressing occurrence of "warpage" toward the thick portion 23 side of each flange portion 21 as described above, it is easy to finish the entire surface of the rotor support surface 22 of each flange portion 21 into a flat surface. Therefore, it is possible to install the brake rotor 55 stably.

In addition, in the first embodiment, the thick portion molding groove 82 for forming the thick portion 23 of each flange portion 21 is formed at the material inflow side of the molding groove 76 of the first molding die 71, and the bottom surface of the thick portion molding groove 82 is formed to have the inclined surface 82a such that the depth gradually reduces from a portion adjacent to the base portion of the flange portion 21 toward a portion adjacent to the bolt hole 24.

Then, the first molding die 71 and the corresponding second molding die 72 are used to form the secondary molding 62. By so doing, it is possible to easily form the secondary molding 62, which has the thick portion 23 in a slope shape such that the thickness gradually reduces from a portion adjacent to the base portion of each flange portion 21 toward a portion adjacent to the bolt hole 24, at one side surface near the base portion of the flange portion 21.

By extension, it is possible to easily manufacture the wheel bearing device equipped with the flanged shaft member 1 formed of the secondary molding 62, so it is effective in reducing manufacturing cost.

In addition, the first molding die 71 is formed so that the inclination angle $\theta 2$ of the inclined surface 82a of the bottom surface of each thick portion molding groove 82 is equal to the inclination angle $\theta 1$ of the inclined surface 23a of the thick portion 23 of each flange portion 21, that is, the inclination angle 92 is set to satisfy the relationship "20° $\leq$ $\theta 2 \leq 45$°", and then the first molding die 71 and the corresponding second molding die 72 are used to form the secondary molding 62. Thus, part of material for cold side extrusion smoothly flows to each flange molding portion 78 along the inclined surface 82a having the inclination angle $\theta 2$. Therefore, it is possible to improve durability by suppressing abrasion of the first molding die 71, and it is possible to favorably form the desired flange portions 21. In addition, it is easy to release a forging after the flange portions 21 are formed.

In addition, it is easy to ensure a sufficient bolt bearing surface 21c around the opening edge at one side of the bolt hole 24 of each flange portion 21.

In other words, when the inclination angle $\theta 1$ of the inclined surface 23a of the thick portion 23 of each flange portion 21 is larger than 45°, inconvenience tends to occur. That is, flow of material may deteriorate or releaseability of a forging from the first molding die 71 may deteriorate. In addition, when the inclination angle $\theta 1$ of the inclined surface 23a of the thick portion 23 of each flange portion 21 is smaller than 20°, the inclined surface 23a of the thick portion 23 elongates toward the bolt hole 24 of the flange portion 21, so inconvenience tends to occur. That is, it may be difficult to ensure the bolt bearing surface 21c. However, as described above, by setting the inclination angle θ1 of the inclined surface 23 a of the thick portion 23 of each flange portion 21 so as to satisfy the relationship "20° ≤ θ1 ≤ 45°", the above inconvenience does not occur.

In addition, in the first embodiment, the flange portions 21 are formed by cold side extrusion, the bolt hole 24 is formed in each flange portion 21, and then the bolt bearing surface 21c around the opening edge at one side of the bolt hole 24 of each flange portion 21 is finished into a flat surface by coining. Thus, it is not necessary to turn the bolt bearing surface 21c of each flange portion 21.

Furthermore, by finishing the bolt bearing surface 21c of each flange portion 21 into a flat surface by coining, it is possible to favorably improve the strength of each flange portion 21 in comparison with the case where the bolt bearing surface 21c of each flange portion 21 is turned.

In addition, in the first embodiment, when the plurality of flange portions 21 are formed radially by cold side extrusion, it is possible to further favorably improve the strength of each flange portion 21 by forming the thick portion 23 at one side surface of the flange portion 21.

In addition, in cold side extrusion, warpage toward the thick portion 23 side may occur in each flange portion 21 because of the flow characteristics of the material along the fiber flow lines.

If warpage toward the thick portion 23 side occurs in each flange portion 21, and, after that, the bolt bearing surface 21c of the bolt hole 24 of each flange portion 21 is subjected to coining, it is possible to correct the warpage of each flange portion 21 by coining.

In addition, finishing is applied, through coining, over a region (coining region W shown in FIG. 2) that extends from the distal end at one side surface of each flange portion 21, including the bolt bearing surface 21c, to the boundary R surface 23b of the inclined surface 23a of the thick portion 23 or to the boundary R surface 23b and the inclined surface 23a. By so doing, the strength of each flange portion 21 is improved, and it is effective in correcting warpage of each flange portion 21.

That is, because of warpage toward the thick portion 23 side of each flange portion 21, for example, it may be difficult to finish the entire surface of the rotor support surface 22 of each flange portion 21 into a flat surface. When the entire surface of the rotor support surface 22 of each flange portion 21 is not finished into a flat surface, it is conceivable that, for example, installation of the brake rotor 55 becomes unstable. However, by correcting "warpage" toward the thick portion 23 side of each flange portion 21 by coining as described above, it is easy to finish the entire surface of the rotor support surface 22 of each flange portion 21 into a flat surface, so it is possible to install the brake rotor 55 stably.

Second Embodiment

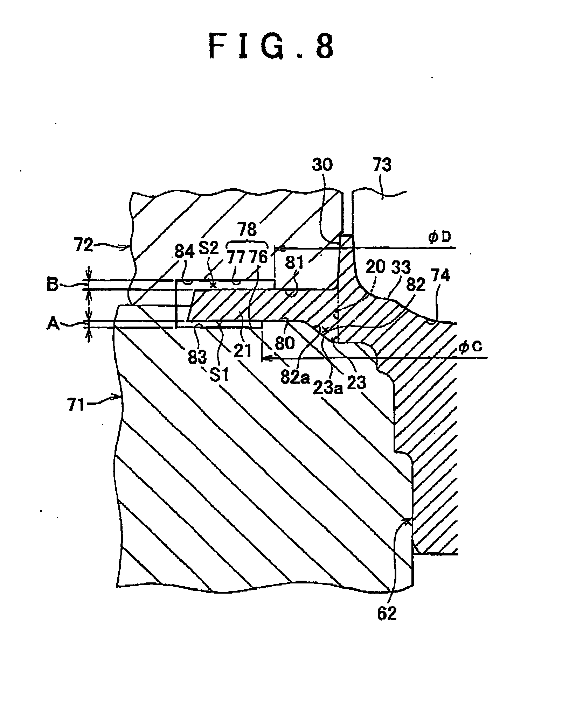

Next, a manufacturing method for a wheel bearing device according to a second embodiment of the invention will be described with reference to FIG. 8.

As shown in FIG. 8, in the second embodiment, relief portions 83 and 84 are respectively formed at the distal end sides of both guide surfaces 80 and 81 of the molding grooves 76 and 77 of the pair of first and second molding dies 71 and 72, other than portions near the material inflow side. The relief portions 83 and 84 keep gaps S1 and S2 from each flange portion 21. The molding grooves 76 and 77 of the pair of first and second molding dies 71 and 72 constitute the flange molding portion 78.

In addition, as shown in FIG 8, where the size of the gap between the bottom surface of the molding groove 76 and one side surface of the flange portion 21, which form the gap S1 of the relief portion 83 of the first molding die 71, is A, and the size of the gap between the bottom surface of the molding groove 77 and the other side surface of the flange portion 21, which form the gap S2 of the relief portion 84 of the second molding die 72, is B, it is desirable to suppress occurrence of warpage toward the thick portion 23 side of each flange portion 21 by setting these sizes to satisfy the relationship "0.5 mm > A ≤ B < 0.5 mm".

In addition, in the second embodiment, where the outside diameter of the guide surface 80 of the first molding die 71, located at a side of the thick portion 23 near the base portion of each flange portion 21, is φC, and the outside diameter of the opposite guide surface 81 of the second molding die 72 is φD, the diameters are set to satisfy the relationship "φC > φD". The other configuration of the second embodiment is similar to that of the first embodiment, so like reference numerals denote similar components and the description thereof is omitted.

Thus, in the second embodiment, both of the above described first and second molding dies 71 and 72 are used to form the secondary molding 62. By so doing, it is possible to further reduce contact friction force between material and the flange molding portion 78 of the cavity 75 at the time of flow of material in cold forging. Thus, it is effective in improving the die life of both the first and second molding dies 71 and 72.

In addition, where the outside diameter of the guide surface 80 of the first molding die 71, located at a side of the thick portion 23 near the base portion of each flange portion 21, is φC, and the outside diameter of the opposite guide surface 81 of the second molding die 72 is φD, the diameters are set to satisfy the relationship "φC > φD". By so doing, it is possible to suppress occurrence of "warpage" toward the thick portion 23 side of each flange portion 21 because of material flow characteristics in cold forging.

Third Embodiment

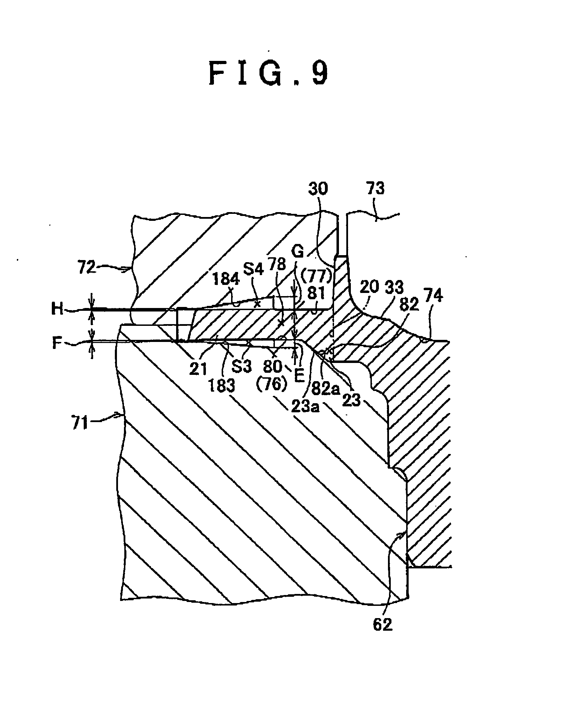

Next, a manufacturing method for a wheel bearing device according to a third embodiment of the invention will be described with reference to FIG. 9.

As shown in FIG 9, in the third embodiment, relief portions 183 and 184 are respectively formed at the distal end sides of both guide surfaces 80 and 81 of the molding grooves 76 and 77 of the pair of first and second molding dies 71 and 72, other than portions near the material inflow side. The molding grooves 76 and 77 of both the first and second molding dies 71 and 72 constitute each flange molding portion 78. The relief portions 183 and 184 keep gaps S3 and S4 from each flange portion 21.

Both relief portions 183 and 184 are formed in a tapered shape so that the depth gradually reduces radially outward from the material inflow side of each flange molding portion 78 toward the distal end side. The distal end portions of both relief portions 183 and 184 have parallel surfaces.

In addition, as shown in FIG. 9, where the maximum gap and minimum gap between the bottom surface of the molding groove 76 and one side surface of each flange portion 21, which form the gap S3 of the relief portion 183 of the first molding die 71, are E and F respectively, and the maximum gap and minimum gap between the bottom surface of the molding groove 77 and the other side surface of each flange portion 21, which form the gap S4 of the relief portion 184 of the second molding die 72, are G and H respectively, it is desirable to suppress occurrence of warpage of each flange portion 21 by setting these gaps to satisfy the relationships "E > F", "G > H", "F $\geq$ 0.0 mm" and "H $\geq$ 0.0 mm".

Furthermore, it is more desirable to suppress occurrence of "warpage" toward the thick portion side of each flange portion 21 by setting the gaps to satisfy the relationships "1.0 mm > E $\leq$ G < 1.0 mm" and "0.3 mm > F $\leq$ H < 0.3 mm".

The other configuration of the third embodiment is similar to that of the first embodiment, so like reference numerals denote similar components and the description thereof is omitted.

Thus, in the third embodiment, both the above described first and second molding dies 71 and 72 are used to form the secondary molding 62. By so doing, it is effective in improving the die life of the molding dies by reducing contact friction force between material and each flange molding portion 78 at the time of flow of material in cold forging, and it is possible to suppress occurrence of "warpage" toward the thick portion 23 side of each flange portion 21.

Forth Embodiment

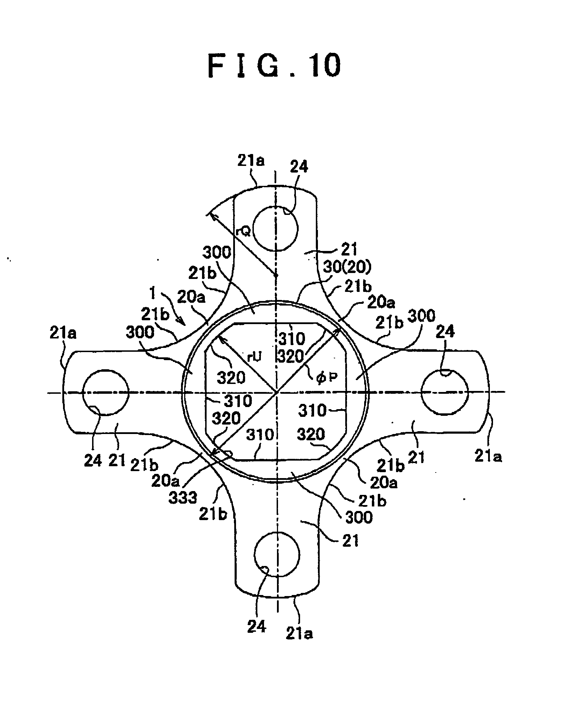

Next, a wheel bearing device according to a fourth embodiment of the invention will be described with reference to FIG 10.

As shown in FIG. 10, the cross-sectional shape of a forged recess 333 that is formed at the center of the end surface of the fitting shaft portion 30 by cold forging is formed into a polygon.

That is, the forged recess 333 is formed in a polygon corresponding to the number of flange portions 21. Each side 310 of the polygon is formed into a flat shape in a direction perpendicular to the direction of side extrusion of each flange portion 21. The intersections of these sides 310 of the polygon are formed at a circular arc-shaped circular arc portion 320 formed along the outer shape of the fitting shaft portion 30. By so doing, a forged recess thick portion 300, which is thicker than the other portion at which no flange is formed, is formed at a portion of the forged recess 333, corresponding to the base portion (proximal portion) of each flange portion 21.

In addition, the circular arc-shaped circular arc portion 320 formed along the outer shape of the fitting shaft portion 30 is formed at each corner of the polygon, at which no flange portion 21 is formed in the forged recess 333. Thus, each circular arc portion 320 is formed into a thin shape.

In addition, in the fourth embodiment, four flange portions 21 are formed in the flanged shaft member 1 and extend radially outward on the outer peripheral surface of the intermediate shaft portion 20, and the cross-sectional shape of the forged recess 333 is rectangular accordingly.

In addition, the circular arc portion 320 is formed at each of the four corners of the forged recess 333 to prevent concentration of stress on these circular arc portions 320.

In addition, each circular arc portion 320 is formed to have a radius of about half the diameter of the brake rotor fitting portion 31 (see FIG. 1) of the fitting shaft portion 30.

That is, where the diameter of the brake rotor fitting portion 31 (see FIG. 1) of the fitting shaft portion 30 is $\phi$P, and the radius of the circular arc portion 320 at each corner of the forged recess 333 is rU, each circular arc portion 320 is formed to satisfy the relationship $\phi$P/2 $\approx$ rU.

Note that the radius rU of each circular arc portion 320 is substantially equal to the radius rQ of the circular arc surface 21a formed at the distal end of each flange portion 21.

The other configuration of the fourth embodiment is similar to that of the first embodiment, so like reference numerals denote similar components and the description thereof is omitted.

Therefore, similar advantageous effects to those of the first embodiment are obtained from the wheel bearing device according to the fourth embodiment of the invention.

Particularly, in the fourth embodiment, the forged recess thick portion 300 is formed at a portion of the forged recess 333, corresponding to the base portion of each flange portion 21, and the strength of the portion is favorably improved.

Therefore, the wheel bearing device is able to sufficiently withstand repeated stress attended with repeated load from the wheel side.

In addition, the forged recess thick portion 300 is formed to make it possible to ensure material flow characteristics of a portion of the forged recess 333, corresponding to the base portion of each flange portion 21, to each flange portion 21. Thus, it is possible to ensure moldability of cold side extrusion.

In addition, each corner of the forged recess 333 becomes a portion at which no flange portion 21 is formed and to which repeated stress is hard to be applied. Thus, it is possible to favorably reduce the weight by forming the thin circular arc portions 320 at these corners.

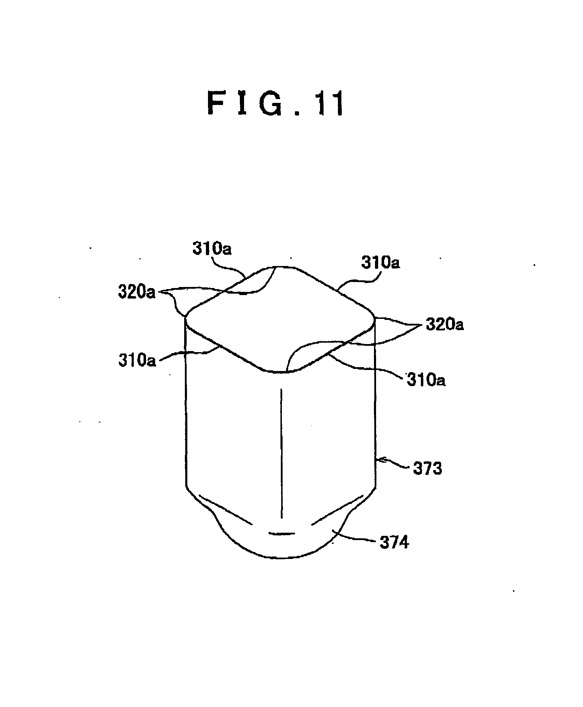

Next, a manufacturing method for the wheel bearing device according to the fourth embodiment will be described with reference to FIG 11.

A punch 373 of a forging die apparatus for cold side extrusion, used in the manufacturing method for the wheel bearing device according to the fourth embodiment, is formed so that the cross-sectional shape is a polygonal shape corresponding to the cross-sectional shape of the forged recess 333 as shown in FIG 11.

That is, the punch 373 is formed in a polygon corresponding to the number of flange portions 21, and each side 310a of the polygon is formed into a flat shape so as to be perpendicular to the direction of side extrusion of each flange portion 21. In addition, a circular arc-shaped circular arc portion 320a formed along the outer shape of the fitting shaft portion 30 is formed at each corner of the intersection of the adjacent sides 310a.

In addition, in order to uniformly form the flange portions 21 radially in side extrusion, a distal end portion 374 of the punch 373 is formed into a smooth mountain shape such that the diameter gradually reduces, and the distal end of the punch 373 has a smooth curved surface. This is also to form a smooth dent so as to prevent concentration of stress on the forged recess 333.

In addition, the other configuration of the forging die apparatus for cold side extrusion, used in the manufacturing method for the wheel bearing device according to the fourth embodiment, is similar to that of the first embodiment, second embodiment or third embodiment, so the description thereof is omitted.

Thus, with the manufacturing method for the wheel bearing device according to the fourth embodiment, by using the punch 373 shown in FIG 11, it is possible to form the forged recess thick portion 300 at a portion of the forged recess 333, corresponding to the base portion of each flange portion 21. In addition, it is possible to form the flange portions 21 by side extrusion while forming the forged recess thick portions 300 at the same time. Therefore, it is possible to favorably improve the strength of a portion near the base portion of each flange portion 21 of the wheel bearing device. In addition, the circular arc-shaped circular arc portion 320a formed along the outer shape of the fitting shaft portion 30 is formed at each corner of the polygonal punch 373, and each corner has no acute shape, so it is possible to ensure the life of the punch 373.

Fifth Embodiment

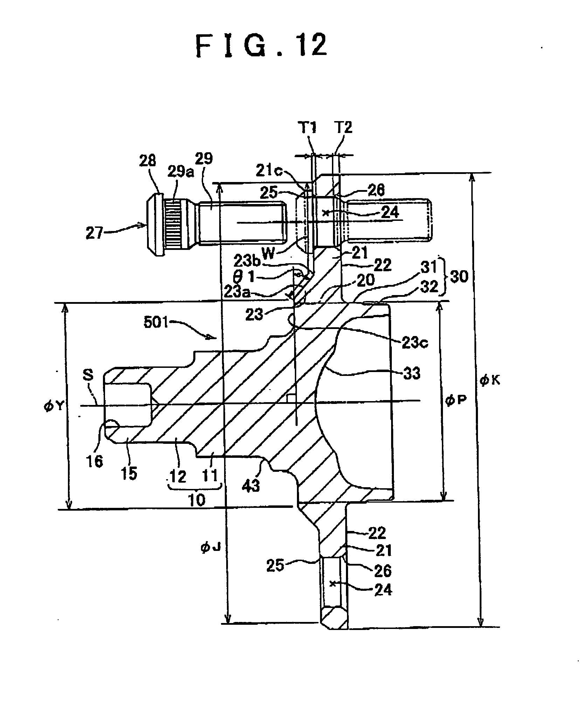

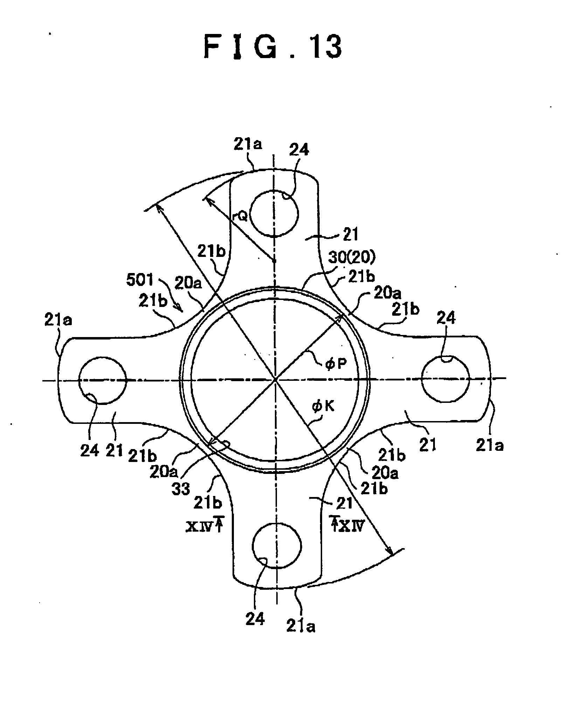

Next, a wheel bearing device according to a fifth embodiment of the invention will be described with reference to FIG. 12 to FIG 14. In the fifth embodiment, as shown in FIG 12 and FIG 13, where, in the outside diameter at the end portion of each flange portion 21 of a flanged shaft member 501 in the direction of side extrusion (outside diameter made by the distal end of each flange portion 21), the outside diameter of the end portion of the rotor support surface 22, which is a surface adjacent to the fitting shaft portion 30 and supports a brake rotor, is $\phi$K, and the outside diameter of the surface opposite to the rotor support surface 22 is $\phi$J, the diameters are set to satisfy the relationship "$\phi K \geq \phi J$".

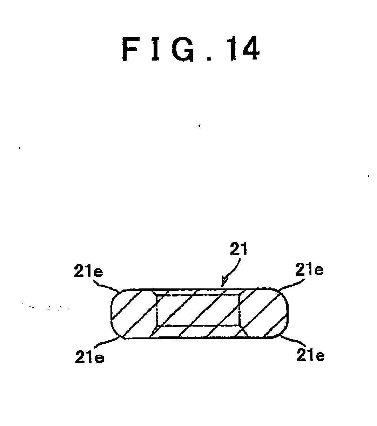

In addition, as shown in FIG. 14, each edge portion 21e of the cross-sectional shape taken perpendicularly to the longitudinal direction of each flange portion 21 is formed in an R-chamfered shape. For example, when the thickness of each flange portion 21 is about 6 mm to 8 mm, each edge portion 2 1 e is desirably formed with a rounded surface having a radius of 3 mm. The other configuration of the fifth embodiment is similar to that of the first embodiment, so like reference numerals denote similar components and the description thereof is omitted.

Therefore, similar function and advantageous effects to those of the first embodiment are obtained from the thus configured wheel bearing device according to the fifth embodiment of the invention.

Particularly, in the fifth embodiment, where, in the outside diameter at the end portion of each flange portion 21 of a flanged shaft member 501 in the direction of side extrusion (outside diameter made by the distal end of each flange portion 21), the outside diameter of the end portion of the rotor support surface 22, which is a surface adjacent to the fitting shaft portion 30 and supports a brake rotor, is $\phi$K, and the outside diameter of the end portion of the surface opposite to the rotor support surface 22 is $\phi$J, the diameters are set to satisfy the relationship "$\phi K \geq \phi J$".

By so doing, the area of each flange portion 21 at the rotor support surface 22 side is larger than or equal to the area of the flange portion 21 at the bolt bearing surface 21c side, so it is possible to ensure the rigidity. Therefore, the brake rotor is supported by a further large flange surface, and it is therefore possible to install the brake rotor further stably.

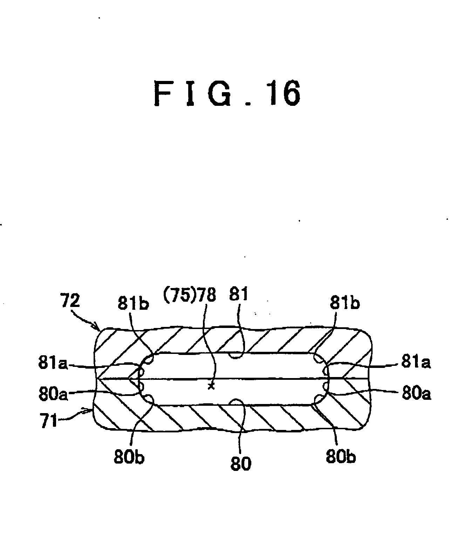

Furthermore, in the fifth embodiment, as shown in FIG. 14, each edge portion 21e of the cross-sectional shape taken perpendicularly to the longitudinal direction of each flange portion 21 is formed in an R-chamfered shape. Thus, when the flange portions 21 are formed by cold side extrusion, as shown in FIG. 16, the flange portions 21 may be formed using molding dies (first and second molding dies 71 and 72, which will be described later) having flange molding portions (which will be described later) 78 in each of which edge portions 80b and 81b are formed with a rounded surface in correspondence with the cross-sectional shape of each flange portion 21.

Therefore, it is possible to prevent concentration of material flow pressure in cold forging on the edge portions 80b and 81b of the cross-sectional shape of each flange molding portion 78.

As a result, it is possible to improve the die life by preventing early abrasion of the edge portions 80b and 81b of the cross-sectional shape of each flange molding portion 78, and, by extension, it is possible to reduce manufacturing cost of the wheel bearing device.

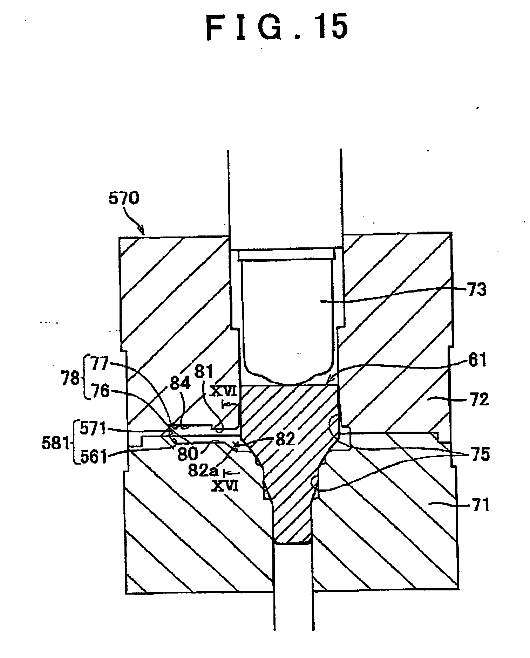

Next, a manufacturing method for the wheel bearing device according to the fifth embodiment will be described with reference to FIG. 15 to FIG. 17.

As shown in FIG. 15 to FIG. 17, in a forging die apparatus 570 for cold side extrusion, used in the manufacturing method for the wheel bearing device according to the fifth embodiment, the gap between the facing guide surfaces 80 and 81 of both upper and lower wall surfaces of the molding grooves 76 and 77 of both the first and second molding dies 71 and 72 is set to a size equivalent to the thickness of each flange portion 21, and the gap between the facing guide surfaces 80a and 81a of both left and right side wall surfaces is set to a size equivalent to the width of each flange portion 21. Then, the cross-sectional shape taken perpendicularly to the longitudinal direction of each flange molding portion 78 is formed in the same shape as the cross-sectional shape of each flange portion 21, and the edge portions 80b and 81b are formed with a rounded surface (for example, a rounded surface having a radius of 3 mm).

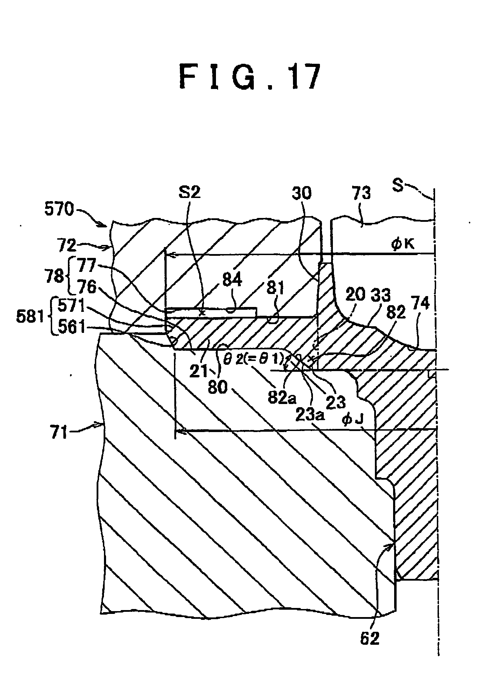

In addition, as shown in FIG. 15 and FIG 17, in the cavity 75 formed by the pair of first and second molding dies 71 and 72 provided for the forging die apparatus 570 for cold forging, a restricting surface 581 is formed at the distal end of each flange molding portion 78, corresponding to each flange portion 21, in the direction of side extrusion. At the time of side extrusion, the distal end portion of each flange portion 21 contacts the restricting surface 581 to restrict the length by which the flange portion 21 is extruded.

As shown in FIG 17, each restricting surface 581 is formed in accordance with the outside diameter $\phi K$ of the end portion of the rotor support surface 22 and the outside diameter $\phi J$ of the end portion of the bolt bearing surface. The rotor support surface 22 is a surface adjacent to the fitting shaft portion 30 and supports the brake rotor. The bolt bearing surface is a surface opposite to the rotor support surface. In addition, the end portion of the molding groove 77, formed in the second molding die 72, in the direction of side extrusion is formed of a vertical end surface 571 that is vertical to the flange surface. This is because a vertical end surface 571 is formed to enable the secondary molding 62 of the flanged shaft member 1 to separate from the die. In addition, the end portion of the molding groove 76, formed in the first molding die 71, in the direction of side extrusion has an inclined surface 561 that is inclined to form a chamfered shape.

By so doing, the side extrusion length of the end portion of each flange portion 21 in the direction of side extrusion, formed by side extrusion molding of the forging die apparatus 570 for cold forging, is restricted by the vertical end surface 571 and the inclined surface 561.

Note that the circumferential shape of the restricting surface 581 formed by the above described vertical end surface 571 and the inclined surface 561 is formed in correspondence with the shape of the circular arc surface 21a that is the shape of the distal end of each flange portion 21.

In addition, the other configuration of the forging die apparatus 570 for cold side extrusion, used in the manufacturing method for the wheel bearing device according to the fifth embodiment, is similar to that of the forging die apparatus 70 for cold side extrusion, used in the manufacturing method for the wheel bearing device according to the first embodiment, so like reference numerals denote similar components and the description thereof is omitted.

Thus, in the manufacturing method for the wheel bearing device according to the fifth embodiment as well, the flanged shaft member 501 according to the fifth embodiment is manufactured through the process sequence similar to that of the manufacturing method for the wheel bearing device according to the first embodiment, and then the wheel bearing device is manufactured.

Next, in the flanged shaft member 1 (501) employed for the wheel bearing device according to the first embodiment, fourth embodiment or fifth embodiment, the characteristic related to the plane projection area of the flange portions 21 and intermediate shaft portion 20 will be described.

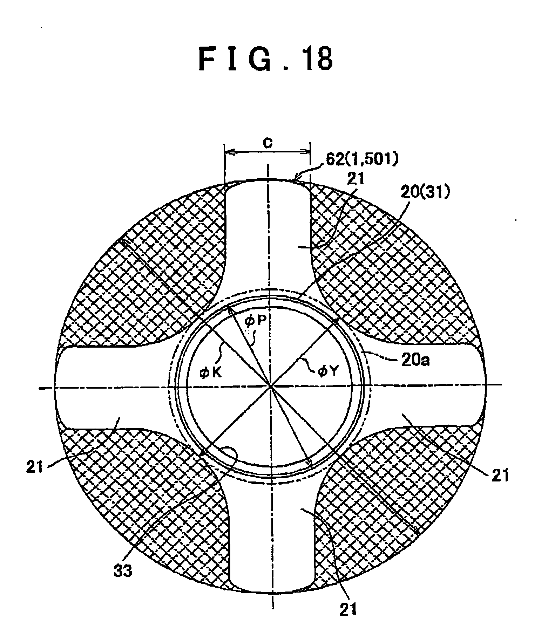

The shaded portion in FIG. 18 indicates a region in which the first molding die 71 contacts the second molding die 72 within a region of an outside diameter circle to which the flange portions 21 are extended in the secondary molding of cold forging. In other words, the shaded portion is a portion, by which the flange portions 21 are lightened.

Here, where the outside diameter of each flange portion 21 is $\phi$K, the outside diameter of the flange proximal portion 20a at the base of each flange portion 21 is $\phi$Y, the width of each flange portion 21 in the circumferential direction is C, the number of flange portions 21 is N, the area of the flange portions 21 and flange proximal portion 20a as viewed in the axial direction (area of flange projected portion) is Sf, and the area of the outside diameter circle of the flange portions 21 is Sa, the following equations hold.

$$Sf = N \times C \times (1/2) \times (\phi K - \phi Y) + (\phi Y/2) \times (\phi Y/2) \times \pi$$

$$Sa = (\phi K/2) \times (\phi K/2) \times \pi$$

In the first embodiment or the fifth embodiment, Sf/Sa of the secondary molding 62 is set to fall within the range of 0.53 to 0.56.

The Sf/Sa indicates the ratio of the area in which the first molding die 71 is not in contact with the second molding die 72 within the region of the outside diameter circle, to which the flange portions 21 are extended, with respect to the area of the outside diameter circle.

As the Sf/Sa increases, the ratio of the flange projected portion increases. Thus, the flow area of steel material increases, and flow characteristics of steel material by extrusion get better, so moldability improves. On the other hand, as the Sf/Sa increases, the area in which the first molding die 71 contacts the second molding die 72 decreases, and it is necessary to withstand die pressure with a small area, so load on the dies increases.

In addition, as the Sf/Sa decreases, the proportion of the flange projected portion decreases. Thus, the flow area of steel material reduces, and flow characteristics of steel material by extrusion get worse, so moldability deteriorates. On the other hand, as the Sf/Sa decreases, the area in which the first molding die 71 contacts the second molding die 72 increases, so die pressure may be supported with a wide area. Thus, load on the dies reduces.

Note that, as the result of test on the configurations having different values of Sf/Sa, it is found that, when the Sf/Sa is larger than 0.6, the contact area of the dies is small, and it is necessary to withstand die pressure with a small area, so the dies more easily fracture. In addition, it is also found that, when the Sf/Sa is smaller than 0.5, the flow area of steel material reduces, and flow characteristics of steel material get worse, so moldability of the flange portions gets worse and, therefore, the flange portions are hard to be molded into an expected shape. Thus, it is desirable that the Sf/Sa is larger than or equal to 0.5 and smaller than or equal to 0.6.

Incidentally, where the area in which the first molding die 71 contacts the second molding die 72, indicated by the shaded portion in FIG. 18, is Ss, it may be expressed as follows.

$$Ss = Sa - Sf$$

Then, in the first embodiment, Ss is configured to be larger than or equal to 5000 square millimeters and smaller than or equal to 6500 square millimeters. Note that this value is intended for a wheel bearing device for an 1.5-liter class automobile.

That is, when Ss is smaller than 5000 square millimeters, the area in which the first molding die 71 contacts the second molding die 72 is small and, therefore, the dies more easily fracture. In addition, when Ss is larger than 6500 square millimeters, the flow area of steel material reduces and then flow characteristics of steel material deteriorate, so inconvenience may occur. That is, moldability of the flange portions may deteriorate. However, as described above, when Ss is set to satisfy the relationship Ss = Sa - Sf, it is possible to prevent the above inconvenience.

Sixth Embodiment

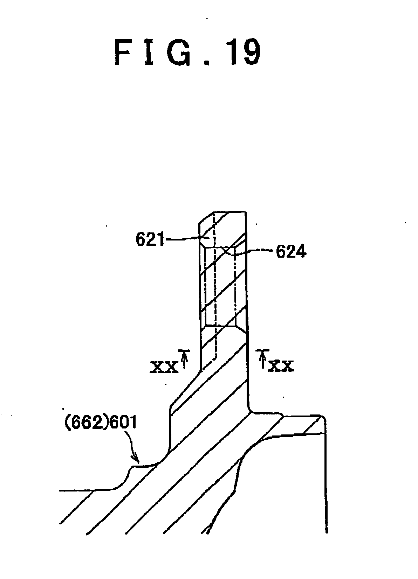

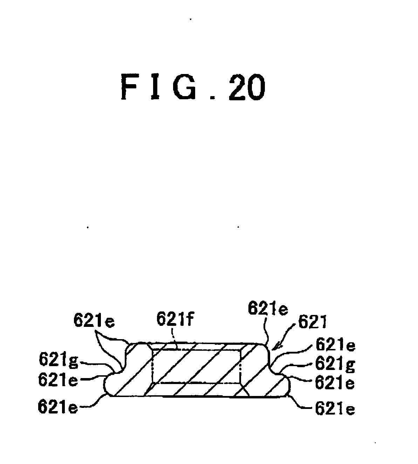

Next, a wheel bearing device according to a sixth embodiment of the invention will be described with reference to FIG. 19 and FIG 20.

As shown in FIG. 19 and FIG. 20, in the sixth embodiment, the cross-sectional shape taken perpendicularly to the longitudinal direction of a flange portion 621 of a flanged shaft member 601 is formed in a stepped shape so that both side portions 621g are thinner than a widthwise center portion 621f.

In addition, it is desirable to set the width of the widthwise center portion 621f of each flange portion 621 to the width of the bearing surface facing the hub bolt 27, and, furthermore, it is desirable to set the thickness of the widthwise center portion 621f to a size that is able to ensure the length that allows the hub bolt 27 to be fixedly press-fitted at a desired strength.

In addition, edge portions 621e of the cross-sectional shape of each flange portion 621 are desirably formed in an R-chamfered shape.

The other configuration of the sixth embodiment is similar to that of the first embodiment or the fifth embodiment, so the description thereof is omitted.

Thus, in the wheel bearing device according to the sixth embodiment of the invention, it is possible to reduce the weight by the amount by which both side portions 621g are formed to be thinner than the widthwise center portion 621f in cross-sectional shape taken perpendicularly to the longitudinal direction of each flange portion 621.

In other words, the widthwise center portion 621f of each flange portion 621 is formed to have a desired thickness, and a through bolt hole 624 is formed in the widthwise center portion 621f. By so doing, it is possible to ensure the bearing surface for the hub bolt 27 and to ensure the length for press fitting while favorably reducing the weight.

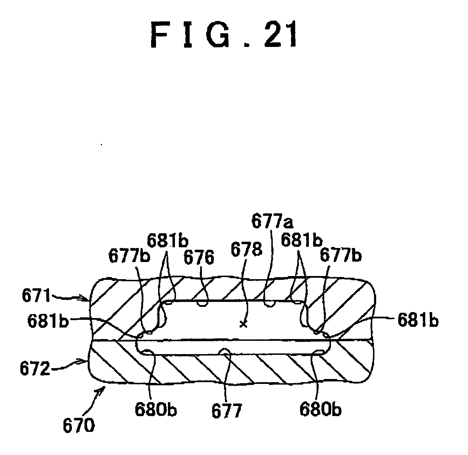

Next, a manufacturing method for the wheel bearing device according to the sixth embodiment will be described with reference to FIG 21.

As shown in FIG. 21, in the sixth embodiment, each flange molding portion 678 is formed of molding grooves 676 and 677 of a pair of first and second molding dies 671 and 672 of the forging die apparatus 670 for cold side extrusion. The cross-sectional shape of each flange molding portion 678 corresponds to the cross-sectional shape of a corresponding one of the above described flange portions 621, and both side portions 677b are formed to be smaller than a widthwise center portion 677a.

Furthermore, edge portions 680b and 681b of the cross-sectional shape of each flange molding portion 678 is formed with a rounded surface.

The other configuration of the manufacturing method for the wheel bearing device according to the sixth embodiment is similar to that of the manufacturing method for the wheel bearing device according to the fifth embodiment, so the description thereof is omitted.

Thus, with the manufacturing method for the wheel bearing device according to the sixth embodiment of the invention, the pair of first and second molding dies 671 and 672 are used. In the pair of first and second molding dies 671 and 672, the cross-sectional shape taken perpendicularly to the longitudinal direction of the flange molding portion 678 has the same shape as the cross-sectional shape of each flange portion 621, and the edge portions 680b and 681b are formed with a rounded surface (for example, a rounded surface having a radius of 3 mm). Thus, it is possible to easily form a secondary molding 662 of the flanged shaft member 601.

In addition, the edge portions 680b and 681b of the cross-sectional shape of the flange molding portion 678 are formed with a rounded surface, so it is possible to prevent concentration of material flow pressure in cold forging. As a result, it is possible to improve the die life by preventing early abrasion of the edge portions 680b and 681b of the cross-sectional shape of the flange molding portion 678 and, by extension, it is possible to reduce manufacturing cost of the wheel bearing device.

Seventh Embodiment

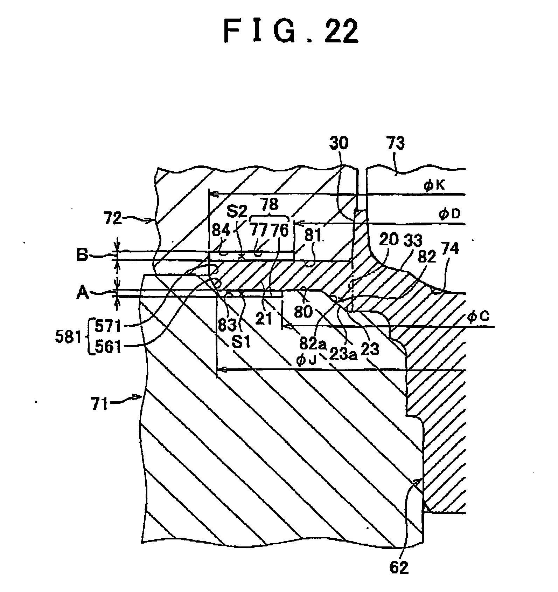

Next, a manufacturing method for a wheel bearing device according to a seventh embodiment of the invention will be described with reference to FIG. 22.

As shown in FIG. 22, in the seventh embodiment, relief portions 83 and 84 are respectively formed at the distal end sides of both guide surfaces 80 and 81 of the molding grooves 76 and 77 of the pair of first and second molding dies 71 and 72, other than portions near the material inflow side. The relief portions 83 and 84 keep gaps S1 and S2 from each flange portion 21. The molding grooves 76 and 77 of the pair of first and second molding dies 71 and 72 constitute each flange molding portion 78.

In addition, as shown in FIG. 22, where the size of the gap between the bottom surface of the molding groove 76 and one side surface of the flange portion 21, which form the gap S1 of the relief portion 83 of the first molding die 71, is A, and the size of the gap between the bottom surface of the molding groove 77 and the other side surface of the flange portion 21, which form the gap S2 of the relief portion 84 of the second molding die 72, is B, it is desirable to suppress occurrence of warpage toward the thick portion 23 side of each flange portion 21 by setting the sizes of the gaps to satisfy the relationship "0.5 mm > A ≤ B < 0.5 mm".

In addition, in the seventh embodiment, where the outside diameter of the guide surface 80 of the first molding die 71, located at a side of the thick portion 23 near the base portion of each flange portion 21, is $\phi C$, and the outside diameter of the opposite guide surface 81 of the second molding die 72 is $\phi D$, the diameters are set to satisfy the relationship "$\phi C > \phi D$".

The other configuration of the seventh embodiment is similar to that of the fifth embodiment, so like reference numerals denote similar components and the description thereof is omitted.

Thus, in the seventh embodiment, both the above described first and second molding dies 71 and 72 are used to form the secondary molding 62. By so doing, it is possible to further reduce contact friction force between material and each flange molding portion 78 of the cavity 75 at the time of flow of material in cold forging, so it is effective in improving the die life of both the first and second molding dies 71 and 72. In addition, it is possible to further reduce the necessary load for side extrusion.

In addition, where the outside diameter of the guide surface 80 of the first molding die 71, located at a side of the thick portion 23 near the base portion of each flange portion 21, is $\phi C$, and the outside diameter of the opposite guide surface 81 of the second molding die 72 is $\phi D$, the diameters are set to satisfy the relationship "$\phi C > \phi D$". By so doing, it is possible to suppress occurrence of "warpage" toward the thick portion 23 side of the flange portion 21 because of material flow characteristics in cold forging.

Eighth Embodiment

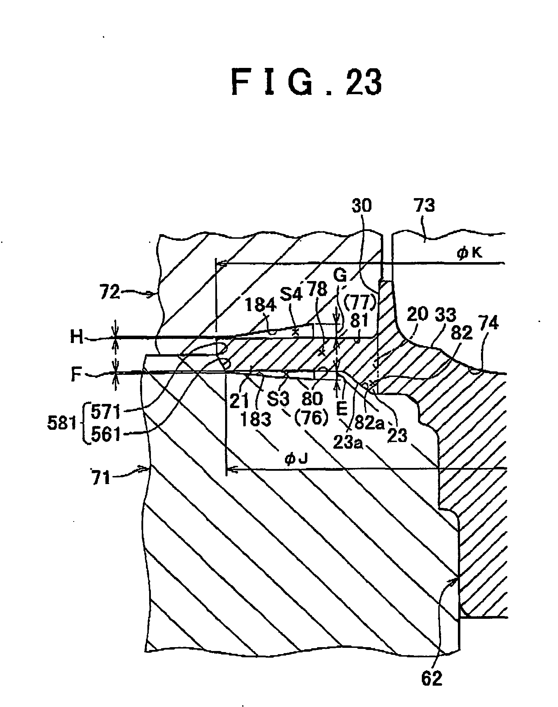

Next, a manufacturing method for a wheel bearing device according to an eighth embodiment of the invention will be described with reference to FIG 23. As shown in FIG. 23, in the eighth embodiment, relief portions 183 and 184 are respectively formed at the distal end sides of both guide surfaces 80 and 81 of the molding grooves 76 and 77 of the pair of first and second molding dies 71 and 72, other than portions near the material inflow side. The molding grooves 76 and 77 of the pair of first and second molding dies 71 and 72 constitute each flange molding portion 78. The relief portions 183 and 184 keep gaps S3 and S4 from each flange portion 21.

Both relief portions 183 and 184 are formed in a tapered shape so that the depth gradually reduces radially outward from the material inflow side of each flange molding portion 78 toward the distal end side. The distal end portions of both relief portions 183 and 184 have parallel surfaces.

In addition, as shown in FIG 23, where the maximum gap and minimum gap between the bottom surface of the molding groove 76 and one side surface of each flange portion 21, which form the gap S3 of the relief portion 183 of the first molding die 71, are E and F respectively, and the maximum gap and minimum gap between the bottom surface of the molding groove 77 and the other side surface of each flange portion 21, which form the gap S4 of the relief portion 184 of the second molding die 72, are G and H respectively, it is desirable to suppress occurrence of warpage of each flange portion 21 by setting these gaps to satisfy the relationships "E > F", "G > H", "F $\geq$ 0.0 mm" and "H $\geq$ 0.0 mm".

Furthermore, it is more desirable to suppress occurrence of "warpage" toward the thick portion side of each flange portion 21 by setting the gaps to satisfy the relationships "1.0 mm > E $\leq$ G < 1.0 mm" and "0.3 mm > F $\leq$ H < 0.3 mm".

The other configuration of the eighth embodiment is similar to that of the fifth embodiment, so like reference numerals denote similar components and the description thereof is omitted.

Thus, in the eighth embodiment, both the above described first and second molding dies 71 and 72 are used to form the secondary molding 62. By so doing, it is effective in improving the die life of the molding dies by reducing contact friction force between material and each flange molding portion 78 at the time of flow of material in cold forging, and it is possible to suppress occurrence of "warpage" toward the thick portion 23 side of each flange portion 21.

Ninth Embodiment

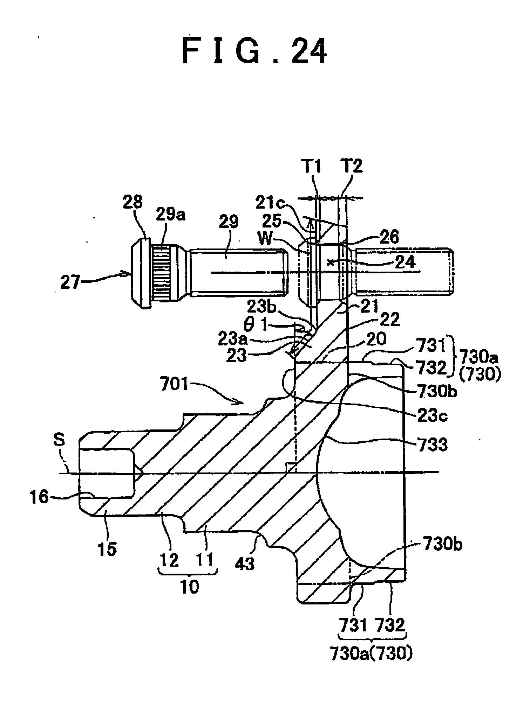

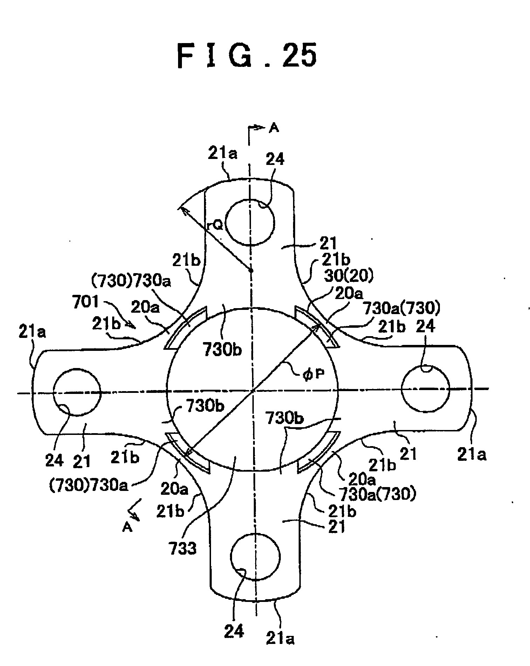

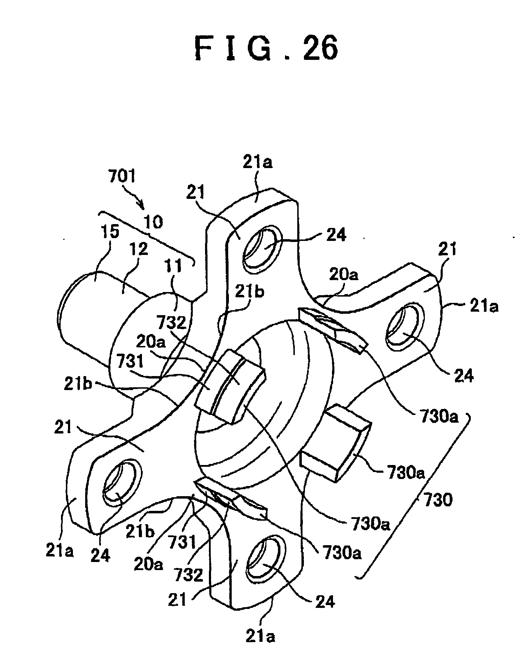

Next, a wheel bearing device according to a ninth embodiment of the invention will be described with reverence to FIG. 24 to FIG. 26.

As shown in FIG. 24 to FIG. 26, in the ninth embodiment, a fitting shaft portion 730 of a flanged shaft member 701 is formed of a plurality of fitting protrusions 730a formed between the adjacent flange portions 21 so as to axially protrude, and flat surfaces 730b that are flush with the rotor support surfaces 22 of the flange portions 21 are formed at portions at which no fitting protrusion 730a is formed.

In addition, on each of the outer side surfaces of the plurality of fitting protrusions 730a, a brake rotor fitting portion 731 is formed at the flange portion 21 side, and a wheel fitting portion 732 having a slightly smaller diameter than that of the brake rotor fitting portion 731 is formed at the distal end side.

In addition, the gap between the adjacent fitting protrusions 730a is set to the same size as the width of each flange portion 21.

Furthermore, the plurality of fitting protrusions 730a that constitute the fitting shaft portion 730 are formed simultaneously with the formation of the flange portions 21 by cold side extrusion.

In addition, in the ninth embodiment as well, as in the case of the first embodiment, four flange portions 21 are formed in the flanged shaft member 701 and extend radially outward on the outer peripheral surface of the intermediate shaft portion 20, and four fitting protrusions 730a are formed between these flange portions 21.

The other configuration of the ninth embodiment is similar to that of the first embodiment or the fifth embodiment, so like reference numerals denote similar components and the description thereof is omitted.

Therefore, with the wheel bearing device according to the ninth embodiment of the invention, similar function and advantageous effects to those of the first embodiment or the fifth embodiment are obtained.

Particularly, in the ninth embodiment, the fitting shaft portion 730 is formed of the plurality of fitting protrusions 730a formed between the adjacent flange portions 21 so as to axially protrude, so it is possible to prevent concentration of repeated stress attended with repeated load from the wheel on the base portion of each flange portion 21. In addition, both the brake rotor fitting portion 731 and the wheel fitting portion 732 are formed on the outer surface of each of the plurality of fitting protrusions 730a that constitute the fitting shaft portion 730, so the function of fitting a brake rotor and a wheel, through the center holes thereof, onto the fitting shaft portion 730 is not impaired.

In addition, when the plurality of fitting protrusions 730a are formed by cold side extrusion, both the brake rotor fitting portion 731 and the wheel fitting portion 732 are formed at the same time on the outer surface of each of the plurality of fitting protrusions 730a. By so doing, it is possible to save time and effort for cutting.

In addition, it is also possible to use the distal end surfaces of the plurality of fitting protrusions 730a as the reference surface of the wheel bearing device or the reference surface for post-sales service by cutting the distal end surfaces of the plurality of fitting protrusions 730a in the process downstream of cold forging.

In addition, the flanged shaft member 701 according to the ninth embodiment receives a large compressive force at the time of molding in cold forging and the mechanical properties of the material after molding are changed, so the surface is hardened. Thus, it is possible to improve the strength.

In addition, the plurality of fitting protrusions 730a that constitute the fitting shaft portion 730 are not formed in circumferential regions in which the flange portions 21 are formed, so it is possible to reduce the weight by that much, and it is not necessary to perform turning for removing the portions after molding. Thus, it is possible to reduce manufacturing costs. Furthermore, it is possible to ensure material flow characteristics for forming the flange portions 21, and it is possible to ensure moldability of cold side extrusion.

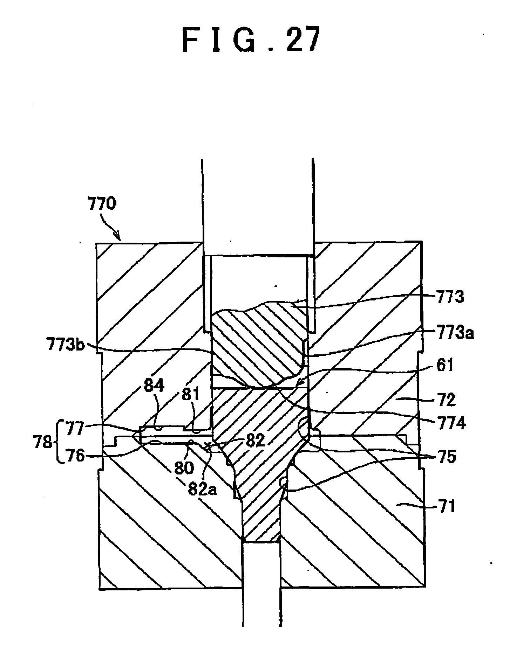

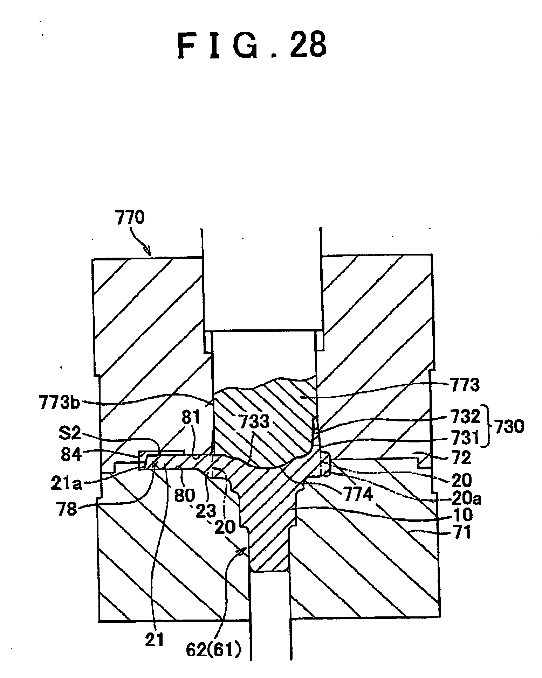

Next, a manufacturing method for the wheel bearing device according to the ninth embodiment will be described with reference to FIG. 27 to FIG 29.

As shown in FIG. 27 to FIG. 29, in a forging die apparatus 770 for cold side extrusion, used in the manufacturing method for the wheel bearing device according to the ninth embodiment, a molding space for forming the plurality of fitting protrusions 730a is formed between a punch 773, used in the forging die apparatus 770, and a fitting portion of the second molding die 72. Then, the forged recess 733 is formed by cold side extrusion while radially forming the plurality of flange portions 21 and the flange proximal portion 20a on the outer peripheral surface of the intermediate shaft portion 20 of the primary molding 61, and, at the same time, the plurality of fitting protrusions 730a and flat surfaces 730b that constitute the fitting shaft portion 730 are formed.

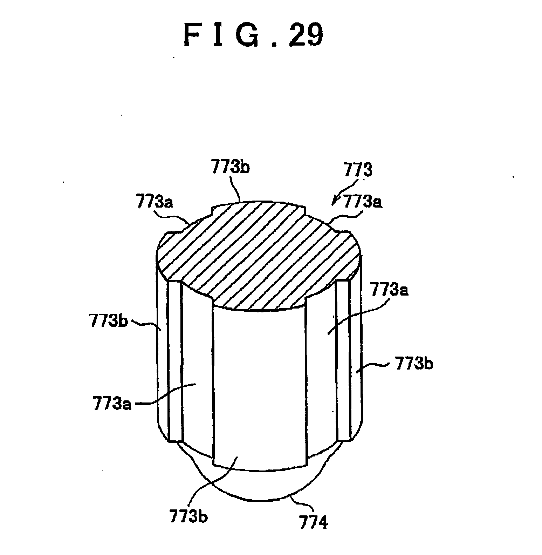

As shown in FIG 29, the punch 773 used in the ninth embodiment has molding recesses 773a and protrusions 773b that are formed alternately in the circumferential direction. The molding recesses 773a define molding spaces for forming the plurality of fitting protrusions 730a in cooperation with the second molding die 72 on the outer peripheral surface of the punch 773. The protrusions 773b are used for forming the flat surfaces 730b.

In addition, in order to uniformly form the flange portions 21 radially in side extrusion, a distal end portion 774 of the punch 773 is formed into a smooth mountain shape such that the diameter of the punch 773 gradually reduces, and the distal end of the punch 773 has a smooth curved surface. This is to form a smooth dent so as to prevent concentration of stress on the forged recess 733 of the flanged shaft member 701.

The other configuration of the forging die apparatus 770 for cold side extrusion according to the ninth embodiment is similar to that of the first embodiment, so like reference numerals denote similar components and the description thereof is omitted.

Therefore, with manufacturing method for the wheel bearing device according to the ninth embodiment, similar function and advantageous effects to those of the first embodiment or the fifth embodiment are obtained.

Particularly, in the ninth embodiment, the punch 773 having the molding recesses 773a and the protrusions 773b that are formed alternately in the circumferential direction on the outer peripheral surface of the punch 773 is used. Thus, it is possible to form the forged recess 733 by cold side extrusion while radially forming the plurality of flange portions 21 and the flange proximal portion 20a on the outer peripheral surface of the intermediate shaft portion 20 of the primary molding 61, and, at the same time, to form the plurality of fitting protrusions 730a and flat surfaces 730b that constitute the fitting shaft portion 730. By so doing, it is possible to reduce manufacturing costs and reduce the weight, for example.

Note that the manufacturing method for the wheel bearing device according to the ninth embodiment has been described by way of example in the case where the punch 773 having the molding recesses 773a, used to form the plurality of fitting protrusions 730a, and the protrusions 773b that are alternately formed in the circumferential direction; instead, it is also applicable that molding spaces for forming the plurality of fitting protrusions 730a in cooperation with the outer peripheral surface of a punch may be formed by alternately forming molding recesses and protrusions in the circumferential direction of the fitting portion of the second molding die (cope) 772 of the forging die apparatus 770 for cold forging.

Note that the invention is not limited to the first to ninth embodiments; the invention may be modified into various forms without departing from the scope of the invention.

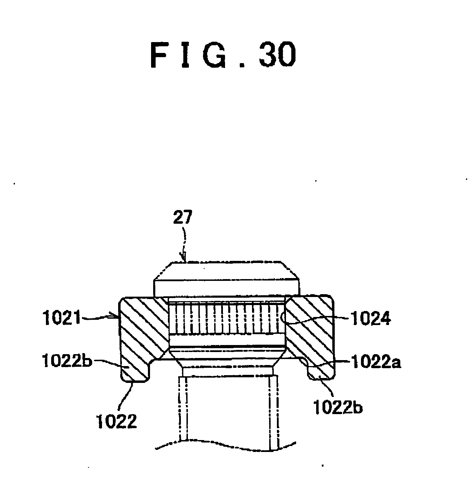

For example, the invention may be embodied in the form such that the cross-sectional shape of each of the plurality of flange portions of the flanged shaft member is modified into shapes shown in FIG. 30 to FIG. 36.

That is, it is applicable that, as shown in FIG. 30, a recess 1022a is formed at the widthwise center portion at a rotor support surface 1022 side of each of a plurality of flange portions 1021 of the flanged shaft member, and ribs 1022b are formed on both widthwise side portions of the recess 1022a to thereby form each flange portion 1021 to have a U-shaped cross section.

In this case, a through bolt hole 1024 is formed at the recess 1022a. The hub bolt 27 is press-fitted and arranged in the bolt hole 1024.

In addition, the thickness of a portion at which the recess 1022a of the flange portion 1021 is formed is desirably set to a size that allows the hub bolt 27 to be fixedly press-fitted at a desired strength.

As described above, by forming each flange portion 1021 to have a U-shaped cross section, it is possible to reduce the weight while ensuring the strength required of the flange portions 1021. In addition, the bolt hole 1024 to which the hub bolt 27 is press-fitted is not longer than necessary, so it is possible to suppress deformation of each flange portion 1021 due to press-fitting of the hub bolt 27.

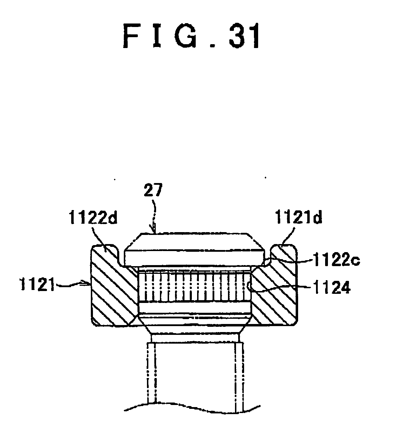

In addition, it is applicable that, as shown in FIG 31, a recess 1122c is formed at the widthwise center portion at the bolt bearing surface side of each of a plurality of flange portions 1121 of the flanged shaft member, and ribs 1122d are formed on both widthwise side portions of the recess 1122c to thereby form each flange portion 1121 to have a U-shaped cross section.

In this case, a through bolt hole 1124 is formed at the recess 1122c. The hub bolt 27 is press-fitted and arranged in the bolt hole 1124.

In addition, the thickness of a portion at which the recess 1122c of the flange portion 1121 is formed is desirably set to a size that allows the hub bolt 27 to be fixedly press-fitted at a desired strength.

As described above, by forming each flange portion 1121 to have a U-shaped cross section, it is possible to reduce the weight while ensuring the strength required of the flange portions 1121.

In addition, the bolt hole 1124 to which the hub bolt 27 is press-fitted is not longer than necessary, so it is possible to suppress deformation of each flange portion 1121 due to press-fitting of the hub bolt 27.

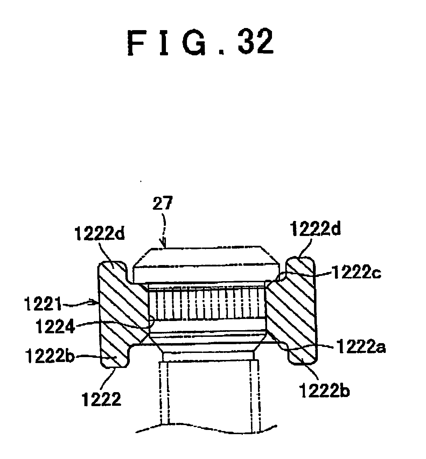

In addition, it is also applicable that, as shown in FIG. 32, a recess 1222a is formed at the widthwise center portion at a rotor support surface 1222 side of each of a plurality of flange portions 1221 of the flanged shaft member and ribs 1222b are formed on both widthwise side portions of the recess 1222a and, furthermore, a recess 1222c is formed at the widthwise center portion at the bolt bearing surface side of each flange portion 1221 and ribs 1222d are formed on both widthwise side portions of the recess 1222c to thereby form each flange portion 1221 to have an H-shaped cross section.

In this case, a through bolt hole 1224 is formed at the recesses 1222a and 1222c. The hub bolt 27 is press-fitted and arranged in the bolt hole 1224.

In addition, the thickness of a portion at which the recesses 1222a and 1222c of each flange portion 1221 are formed is desirably set to a size that allows the hub bolt 27 to be fixedly press-fitted at a desired strength.

As described above, by forming each flange portion 1221 to have an H-shaped cross section, it is possible to further reduce the weight while ensuring the strength required of the flange portions 1221.

In addition, the bolt hole 1224 to which the hub bolt 27 is press-fitted is not longer than necessary, so it is possible to suppress deformation of each flange portion 1221 due to press-fitting of the hub bolt 27.

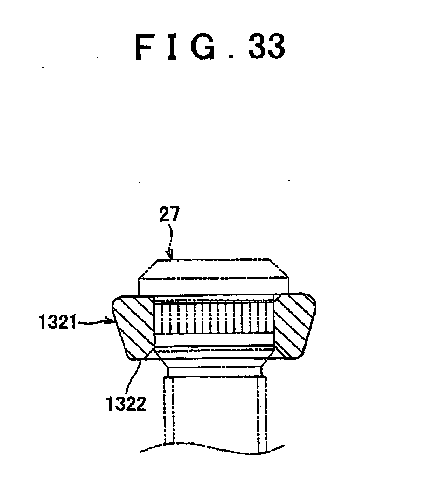

In addition, it is also applicable that, as shown in FIG. 33, a plurality of flange portions 1321 of the flanged shaft member are formed so that the cross-sectional shape is a trapezoidal shape such that the width thereof on the bolt bearing surface side is larger than the width thereof on the rotor support surface 1322 side.

The cross section of each flange portion 1321 is formed in a trapezoidal shape, so the weight is easily reduced in comparison with the case where the cross section of each flange portion is formed in a rectangular shape.

In addition, the width of each flange portion 1321 on the bolt bearing surface side is larger than the width thereof on the rotor support surface 1322 side, so it is easy to ensure the bearing surface of the hub bolt 27.

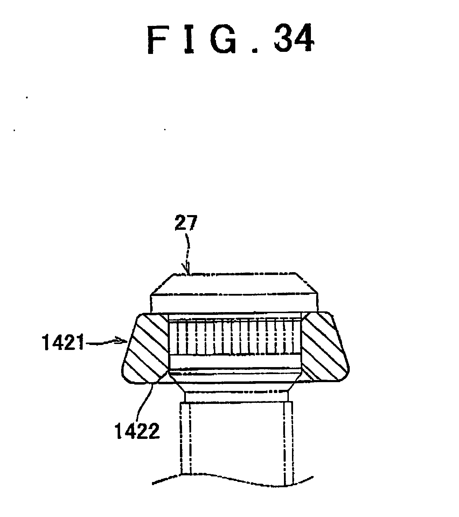

In addition, it is also applicable that, as shown in FIG 34, a plurality of flange portions 1421 of the flanged shaft member are formed so that the cross-sectional shape thereof is a trapezoidal shape such that the width thereof on the rotor support surface 1422 side is larger than the width thereof on the bolt bearing surface side.

Each flange portion 1421 is formed to have a trapezoidal cross section, so the weight is easily reduced in comparison with the case where the cross section of each flange portion is a rectangular shape.

In addition, the width of the flange portion 1421 on the rotor support surface 1422 side is larger than the width of the flange portion 1421 on the bolt bearing surface side, so it is possible to stably support the brake rotor.

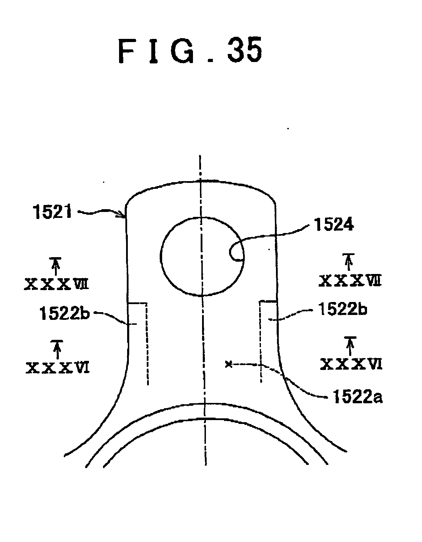

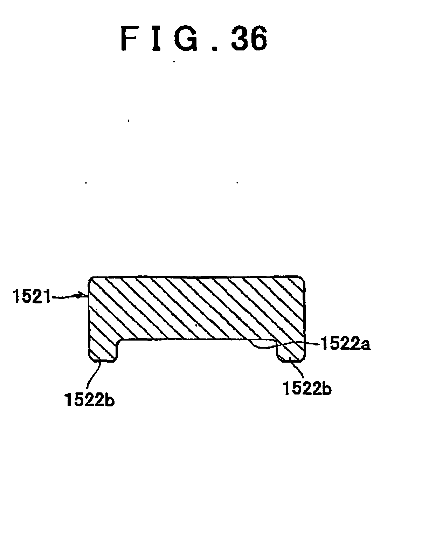

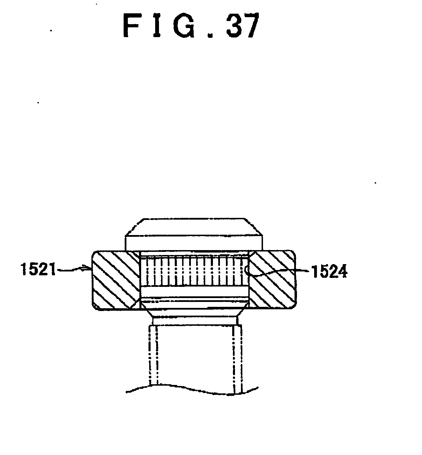

In addition, it is applicable that, as shown in FIG 35 to FIG. 37, a recess 1522a is formed at the widthwise center portion at one side surface side (a rotor support surface 1322 side or a bolt bearing surface side) of a region ranging from the base portion (proximal portion) of each of a plurality of flange portions 1521 of the flanged shaft member to a portion near a corresponding one of bolt holes 1524 and ribs 1522b are formed on both widthwise side portions of the recess 1522a, the cross section of each flange portion 1521 is formed in a U shape as shown in FIG. 36. The cross section of a region ranging from a portion near the bolt hole 1524 of each flange portion 1521 to the distal end may be formed in a rectangular shape as shown in FIG 37.

In this case, in the region ranging from the base portion (proximal portion) of each flange portion 1521 to a portion near a corresponding one of the bolt holes 1524, the weight is reduced by the recess 1522a while the strength may be ensured by the ribs 1522b.

In addition, a region ranging from a portion near the bolt hole 1524 of each flange portion 1521 to the distal end is formed to have a rectangular cross section. By so doing, it is possible to favorably ensure the bolt bearing surface.

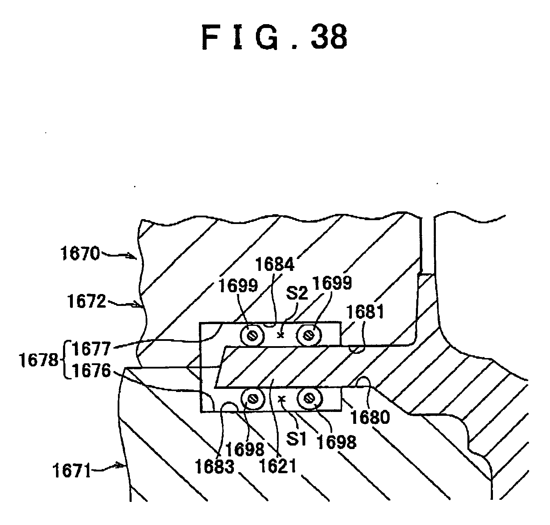

In addition, the configuration shown in FIG. 38 is also applicable. That is, relief portions 1683 and 1684 are respectively formed at the distal end sides of both guide surfaces 1680 and 1681 of molding grooves 1676 and 1677 of a pair of first and second molding dies 1671 and 1672, other than portions near the material inflow side. The molding grooves 1676 and 1677 of the pair of first and second molding dies 1671 and 1672 constitute flange molding portions 1678 of a forging die apparatus 1670 for cold side extrusion. The relief portions 1683 and 1684 keep gaps S1 and S2 from each of a plurality of flange portions 1621 of the flanged shaft member. Furthermore, guide rollers 1698 or 1699 may be arranged in at least one (both in FIG. 38) of both relief portions 1683 and 1684. The guide rollers 1698 or 1699 are in contact with one side surface (in FIG. 38, a rotor support surface side and a bolt bearing surface side) of each flange portion 1621 to rotate to thereby guide extrusion of each flange portion 1621.

In this case, it is possible to convert friction between material (flange portion 1621) and each flange molding portion 1678 at the time of flow of material in cold forging into rolling friction, so it is greatly effective in improving the die life of the pair of first and second molding dies 1671 and 1672. In addition, it is possible to further reduce the necessary load for side extrusion.

Furthermore, it is possible to favorably suppress occurrence of "warpage" of each flange portion 1621.

As described above, a wheel bearing device according to an embodiment of the invention includes a flanged shaft member that includes a shaft portion to which a rolling bearing is assembled, a fitting shaft portion that is formed on one end side of the shaft portion and that is fitted to a center hole of a wheel, and a plurality of flange portions that extend radially outward on an outer peripheral surface located between the shaft portion and the fitting shaft portion and each of which has a bolt hole in which a hub bolt for fastening the wheel is arranged, wherein each flange portion is formed by side extrusion when a forged recess is formed at a center of an end surface of the fitting shaft portion by cold forging.

With the above configuration, the plurality of flange portions are formed radially on the outer peripheral surface located between the shaft portion and the fitting shaft portion by cold side extrusion. Thus, it is possible to reduce manufacturing costs while reducing the weight.

Note that it is desirable to improve the strength of a portion near a base portion of each flange portion by forming one side of a portion near the base portion of each flange portion to be thicker than the other side of the portion near the base portion.

An embodiment of the invention provides a manufacturing method for a wheel bearing device that includes a flanged shaft member that includes a shaft portion to which a rolling bearing is assembled, a fitting shaft portion that is formed on one end side of the shaft portion and that is fitted to a center hole of a wheel, and a plurality of flange portions that are located between the shaft portion and the fitting shaft portion, that extend radially outward and each of which has a through bolt hole in which a hub bolt for fastening the wheel is arranged. The manufacturing method includes: forming the flange portions by side extrusion on an outer peripheral surface between the shaft portion and the fitting shaft portion while forming a forged recess at a center of an end surface of the fitting shaft portion by a forging die apparatus for cold forging, wherein the flange portions are formed using a molding die of the forging die apparatus, wherein the molding die has a relief portion on at least one of both inner wall surfaces of a flange molding portion within a cavity formed in the molding die, the relief portion keeps a gap from a corresponding one of the flange portions, and both inner wall surfaces face both surfaces of a corresponding one of the flange portions.

With the above configuration, it is possible to easily manufacture the wheel bearing device.

In addition, the flange portions are formed using the molding die having the relief portion on at least one of both inner wall surfaces of the flange molding portion, the relief portion keeps the gap from a corresponding one of the flange portions, and both inner wall surfaces face both surfaces of a corresponding one of the flange portions. By so doing, it is possible to reduce contact friction force between material and the flange molding portion of the cavity when the material flows in cold forging. By so doing, it is possible to improve the die life by reducing abrasion of the molding die. In addition, friction resistance between the molding die and material is reduced, so it is possible to reduce the necessary load at which material is molded by side extrusion.

In addition, in the manufacturing method for a wheel bearing device, the flange portions may be formed using the molding die having a pair of relief portions at portions respectively corresponding to both inner wall surfaces of the flange molding portion of the cavity formed in the molding die, wherein the relief portions may respectively keep gaps from both surfaces of a corresponding one of the flange portions.

With the above configuration, the flange portions are formed using the molding die having a pair of relief portions at portions respectively corresponding to both inner wall surfaces of the flange molding portion of the cavity formed in the molding die, wherein the relief portions respectively keep the gaps from both surfaces of a corresponding one of the flange portions. By so doing, it is possible to further reduce contact friction force between material and each flange molding portion of the cavity at the time of flow of material in cold forging, so it is greatly effective in improving the die life of the molding die. In addition, it is possible to further reduce the necessary load for side extrusion.

In addition, in the manufacturing method for a wheel bearing device, the flange portions may be formed using the molding die having a pair of guide surfaces at the flange molding portion of the cavity formed in the molding die, wherein the guide surfaces may face each other with a gap that is smaller than a gap between both relief portions and guide flow of material.

The above configuration is effective in improving the die life of the molding die by reducing contact friction force between material and each flange molding portion of the cavity at the time of flow of material in cold forging.

In the manufacturing method for a wheel bearing device, the flange portions may be formed using the molding die having a pair of tapered relief portions of which the depths gradually reduce from a material inflow side of the flange molding portion of the molding die toward a radially outward distal end side of the flange molding portion.

With the above configuration, the flange portions are formed using the molding die having a pair of tapered relief portions of which the depths gradually reduce from a material inflow side of the flange molding portion of the molding die toward a radially outward distal end side. This is effective in improving the die life of the molding die by reducing contact friction force between material and each flange molding portion of the cavity at the time of flow of material in cold forging, and it is possible to guide the distal end of each flange portion at the distal end sides of both relief portions.

## Claims

1. A wheel bearing device comprising:

   a flanged shaft member (1) that includes a shaft portion (10) to which a rolling bearing (41) is assembled, a fitting shaft portion (30) that is formed on one end side of the shaft portion (10) and that is fitted to a center hole of a wheel, and a plurality of flange portions (21) that extend radially outward on an outer peripheral surface located between the shaft portion (10) and the fitting shaft portion (30) and each of which has a through bolt hole (24) in which a hub bolt (27) for fastening the wheel is arranged, wherein
   each flange portion (21) is formed by side extrusion when a forged recess (33) is formed by cold forging at a center of an end surface of the fitting shaft portion (30),
   **characterized in that**
   a first chamfered portion (25) is formed at one of both opening edges of each bolt hole (24), warpage being directed toward the one of both opening edges when occurring in a corresponding one of the flange portions (21) because of the side extrusion, and a second chamfered portion (26) is formed at the other one of the opening edges of the bolt hole (24);
   the first chamfered portion (25) is located at the side of the roller bearing (41), and
   the relationship T1 < T2 is set where the chamfer depth of the first chamfered portion (25) is T1 and the chamfer depth of the second chamfered portion (26) is T2.

2. The wheel bearing device according to claim 1, wherein
   a thick portion (23) is formed at one side surface near a base portion of each flange portion (21).

3. The wheel bearing device according to claim 2, wherein
   the thick portion (23) is formed in a slope shape so that the thickness of the thick portion (23) gradually reduces from a portion adjacent to the base portion of each flange portion (21) toward a portion adjacent to the bolt hole (24).

4. The wheel bearing device according to claim 1, wherein
   the forged recess (33) is formed with a deep bottom so that a plurality of curved surfaces are formed from an opening side toward a bottom portion.

## Patentansprüche

1. Radlagervorrichtung mit:

einem geflanschten Wellenbauteil (1), das einen Wellenabschnitt (10), an dem ein Rollenlager (41) montiert ist, einen Passwellenabschnitt (30), der an einer Endseite des Wellenabschnitts (10) ausgebildet ist und der in ein Mittelloch eines Rads gepasst wird, und eine Vielzahl von Flanschabschnitten (21) hat, die sich radial nach außen an einer Außenumfangsfläche erstrecken, die zwischen dem Wellenabschnitt (10) und dem Passwellenabschnitt (30) angeordnet ist, wobei jeder von den Flanschabschnitten ein Bolzendurchgangsloch (24) hat, in dem ein Nabenbolzen (27) zum Befestigen des Rads angeordnet ist, wobei

jeder Flanschabschnitt (21) durch Seitenextrusion ausgebildet wird, wenn eine geschmiedete Aussparung (33) durch Kaltschmieden an einer Mitte einer Endfläche des Passwellenabschnitts (30) ausgebildet wird,

**dadurch gekennzeichnet, dass**

ein erster abgeschrägter Abschnitt (25) an einem von beiden Öffnungsrändern von jedem Bolzenloch (24) ausgebildet ist, wobei ein Verzug in Richtung zu dem einen von beiden Öffnungsrändern gerichtet ist, wenn dieser in einem entsprechenden der Flanschabschnitte (21) aufgrund der Seitenextrusion auftritt, und ein zweiter abgeschrägter Abschnitt (26) an dem anderen der Öffnungsränder des Bolzenlochs (24) ausgebildet ist;

der erste abgeschrägte Abschnitt (25) an der Seite des Rollenlagers (41) angeordnet ist, und

die Beziehung T1 < T2 festgelegt ist, wo die Abschrägtiefe des ersten abgeschrägten Abschnitts (25) T1 ist und die Abschrägtiefe des zweiten abgeschrägten Abschnitts (26) T2 ist.

2. Radlagervorrichtung nach Anspruch 1, wobei ein dicker Abschnitt (23) an einer Seitenfläche nahe einem Basisabschnitt von jedem Flanschabschnitt (21) ausgebildet ist.

3. Radlagervorrichtung nach Anspruch 2, wobei der dicke Abschnitt (23) in einer schrägen Form ausgebildet ist, so dass sich die Dicke des dicken Abschnitts (23) von einem Abschnitt benachbart zu dem Basisabschnitt von jedem Flanschabschnitt (21) in Richtung zu einem Abschnitt benachbart zu dem Bolzenloch (24) allmählich verringert.

4. Radlagervorrichtung nach Anspruch 1, wobei die geschmiedete Aussparung (33) mit einem tiefen Boden ausgebildet ist, so dass eine Vielzahl von gekrümmten Flächen von einer Öffnungsseite in Richtung zu einem Bodenabschnitt ausgebildet ist.

**Revendications**

1. Dispositif de roulement de roue comprenant :

un élément (1) d'arbre à bride qui comporte une partie d'arbre (10) à laquelle un palier à roulement (41) est assemblé, une partie d'arbre d'ajustement (30) qui est formée sur un côté d'extrémité de la partie d'arbre (10) et qui est ajustée à un trou central d'une roue, et une pluralité de parties de bride (21) qui s'étendent radialement vers l'extérieur sur une surface périphérique extérieure située entre la partie d'arbre (10) et la partie d'arbre d'ajustement (30) et dont chacune possède un trou de boulon traversant (24) dans lequel un boulon de moyeu (27) permettant la fixation de la roue est agencé, où

chaque partie de bride (21) est formée par extrusion latérale lorsqu'un évidement forgé (33) est formé par forgeage à froid au niveau d'un centre d'une surface d'extrémité de la partie d'arbre d'ajustement (30),

**caractérisé en ce que**

une première partie chanfreinée (25) est formée au niveau de l'un des deux bords d'ouverture de chaque trou de boulon (24), un gauchissement étant dirigé vers l'un des deux bords d'ouverture lorsqu'il se produit dans une partie de bride correspondante parmi les parties de bride (21) en raison de l'extrusion latérale, et une deuxième partie chanfreinée (26) est formée au niveau de l'autre bord d'ouverture parmi les bords d'ouverture du trou de boulon (24);

la première partie chanfreinée (25) est située au niveau du côté du palier de roulement (41), et

la relation Tl <T2 est établie où la profondeur du chanfrein de la première partie chanfreinée (25) est Tl et la profondeur du chanfrein de la deuxième partie chanfreinée (26) est T2.

2. Dispositif de roulement de roue selon la revendication 1, dans lequel
une partie épaisse (23) est formée au niveau d'une surface latérale à proximité d'une partie de base de chaque partie de bride (21).

3. Dispositif de roulement de roue selon la revendication 2, dans lequel
la partie épaisse (23) a la forme d'une pente de sorte que l'épaisseur de la partie épaisse (23) se réduise progressivement d'une partie adjacente à la partie de base de chaque partie de bride (21) vers une partie adjacente au trou de boulon (24).

**4.** Dispositif de palier de roue selon la revendication 1, dans lequel
l'évidement forgé (33) est formé avec un fond profond de sorte qu'une pluralité de surfaces courbées soient formées
d'un côté d'ouverture vers une partie inférieure.

# F I G . 1

# FIG.2

FIG.3

# FIG.4

# F I G . 5

# F I G . 6

# F I G . 7

# FIG.8

# FIG.9

# F I G . 10

# FIG.11

# F I G . 12

# F I G . 13

# F I G . 14

# FIG.15

# F I G . 16

# F I G . 17

# F I G . 18

# F I G . 19

# F I G . 20

# F I G . 21

# F I G . 22

EP 2 221 194 B1

# FIG.23

45

# F I G . 24

# F I G . 25

# F I G . 26

# FIG.27

# FIG.28

# F I G . 29

# F I G . 30

# F I G . 31

# FIG.32

# F I G . 33

# FIG.34

# FIG. 35

# F I G . 36

1521 —→

1522a

1522b

1522b

# F I G . 37

1521 — 1524

# F I G . 38

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003025803 A
- EP 1970141 A1
- EP 1647418 A2
- JP 2008229671 A
- JP 11129703 A
- JP 2004074815 A